# EUROPEAN PATENT APPLICATION

(11) **EP 4 840 708 A2**
(43) Date of publication of application: **18.11.2026**
(21) Application number: 26177663.7
(22) Date of filing: 08.05.2026
(51) Int. Cl.: B60S 3/04, G07F 17/20, G06Q 20/18

(54) **WINDSHIELD WASHER KIOSK**

(30) Priority: 12.05.2025 US 202563804046 P; 30.04.2026 US 202664054112 P
(71) Applicant: Morris, Dustin Lee, Washington, Utah 84780 (US); Morris, Kari, Washington, Utah 84780 (US); Fardos, Edward Anthony, San Clemente, California 92672 (US)
(72) Inventor: Morris, Dustin Lee, Washington, Utah 84780 (US); Morris, Kari, Washington, Utah 84780 (US); Fardos, Edward Anthony, San Clemente, California 92672 (US)
(74) Representative: Cleveland Scott York

(57) **Abstract**

A windshield washer kiosk may include a housing; a fluid delivery system disposed within the housing and including: a fluid reservoir configured to store at least one fluid; a pump fluidically coupled to the fluid reservoir; and at least one fluid conduit; a washer wand fluidically coupled to the fluid delivery system and configured to dispense the cleaning fluid; and a payment interface operatively coupled to a hardware processor, wherein the hardware processor is configured to: receive a payment authorization signal from the payment interface; and in response to receiving the payment authorization signal, activate the fluid delivery system to enable dispensing of the fluid through the washer wand.

## Description

### CROSS-REFERENCE TO RELATED APPLICATION

This application claims to benefit of priority of US Provisional Patent Application No. 63/804,046 filed on May 12, 2025, and entitled "Windshield Washer Kiosk" and US Provisional Patent Application No. 64/054,112 filed on April 30, 2026 entitled "Windshield Washer Kiosk," the entire disclosures of which is hereby incorporated by reference.

### FIELD OF DISCLOSURE

The present disclosure generally relates to vehicle cleaning processes and systems. More particularly, the present disclosure relates to windshield washer kiosk for washing a windshield vehicle such as a semi-trailer truck or any vehicle with a windshield.

### BACKGROUND

Clear visibility through a vehicle's windshield is essential for safe operation, particularly for large commercial vehicles such as 18-wheeler semi-trucks. Operators of these vehicles must navigate long distances under a wide range of environmental conditions, including rain, snow, mud, insects, and dust. Accumulation of dirt, debris, and precipitation on the windshield can severely impair the driver's field of vision, increasing the risk of accidents and reducing the overall safety of both the vehicle and others on the road. Regular and effective windshield, mirror, and other surface cleaning is therefore a critical component of vehicle maintenance and operational safety.

Conventional windshield washer systems for large vehicles are often adaptations of systems originally designed for smaller automobiles, which may not provide sufficient reach, coverage, or cleaning force needed for the expansive surfaces of semi-truck windshields. Moreover, the harsh operating environments and unique physical dimensions of 18-wheelers or large commercial vehicles, for embodiment, demand a washer system that is robust, efficient, and capable of clearing substantial obstructions with minimal driver distraction. The present system and method relates to an improved windshield washer system for use with any vehicle and may be specifically tailored for large commercial vehicles, addressing the need for enhanced visibility, durability, and performance under demanding road conditions.

### BRIEF DESCRIPTION OF THE DRAWINGS

The accompanying drawings illustrate various embodiments of the principles described herein and are part of the specification. The illustrated embodiments are given merely for illustration, and do not limit the scope of the claims.
Fig. 1 is a front perspective view diagram of a windshield washer kiosk according to an embodiment of the principles described herein;
Fig. 2 is a side view diagram of a windshield washer kiosk according to another embodiment of the principles described herein;
Fig. 3 is a front perspective view diagram of the windshield washer kiosk with a plurality of housing covers removed to show the interior portions of the windshield washer kiosk according to an embodiment of the principles described herein;
Fig. 4 is a front perspective view diagram of the windshield washer kiosk with a plurality of housing covers removed to show the interior portions of the windshield washer kiosk according to another embodiment of the principles described herein;
Fig. 5 is a front perspective view diagram of the windshield washer kiosk with a cover of the towel dispensing housing opened to show the interior portions of the towel dispensing apparatus of the windshield washer kiosk according to an embodiment of the principles described herein;
Fig. 6 is a side perspective view diagram of the windshield washer kiosk with a detergent reservoir housing cover opened to show the interior portions of the detergent reservoir housing of the windshield washer kiosk according to an embodiment of the principles described herein;
Fig. 7 is a top and side perspective view diagram of a washer wand of the windshield washer kiosk according to an embodiment of the principles described herein;
Fig. 8 is a perspective view of a windshield washer kiosk according to another embodiment of the principles described herein;
Fig. 9 is a front view of the windshield washer kiosk of Fig. 8 according to another embodiment of the principles described herein;
Fig. 10 is a back view of the windshield washer kiosk of Fig. 8 according to another embodiment of the principles described herein;
Fig. 11 is a bottom view of the windshield washer kiosk of Fig. 8 according to another embodiment of the principles described herein;
Fig. 12 is a top view of the windshield washer kiosk of Fig. 8 according to another embodiment of the principles described herein;
Fig 13 is a perspective, exploded view of the windshield washer kiosk of Fig. 8 showing various internal elements within the windshield washer kiosk according to an embodiment of the principles described herein;
Fig. 14 is a perspective back view of a fluid reservoir, fluid pumps, and a printed circuit board (PCB) used to control, at least, the fluid pumps, the fluid reservoir, fluid pumps, with the fluid reservoir, fluid pumps, LED indicator lights and PCB formed within the housing of the windshield washer kiosk according to an embodiment of the principles described herein;
Fig. 15A is a front perspective view of a mounting bracket for a payment validation system according to an embodiment of the principles described herein;
Fig. 15B is a front perspective view of a payment validation system according to an embodiment of the principles described herein;
Fig. 15C is a front perspective view of the mounting bracket and a back perspective view of the payment validation system of Figs. 15B and 15C with the mounting bracket operatively coupled to the payment validation system via a hinge according to an embodiment of the principles described herein;
Fig. 16 is a block diagram of a windshield washer kiosk payment system including a payment interface of the windshield washer kiosk according to an embodiment of the principles described herein;
Fig. 17 is a block diagram of a windshield washer kiosk payment system of the windshield washer kiosk according to another embodiment of the principles described herein;
Fig. 18 is a flowchart illustrating a method of operating a windshield washer kiosk, including environmental monitoring, system conditioning, payment authorization, and user session control according to an embodiment of the principles described herein;
Fig. 19 is a flowchart illustrating a method of operating a windshield washer kiosk, including environmental monitoring, system conditioning, payment authorization, and user session control according to another embodiment of the principles described herein;
Fig. 20 is a flowchart illustrating a method of operating a windshield washer kiosk, including environmental monitoring, system conditioning, payment authorization, and user session control according to another embodiment of the principles described herein.

Throughout the drawings, identical reference numbers designate similar, but not necessarily identical, elements. The figures are not necessarily to scale, and the size of some parts may be exaggerated to more clearly illustrate the embodiment shown. Moreover, the drawings provide embodiments and/or implementations consistent with the description; however, the description is not limited to the embodiments and/or implementations provided in the drawings.

### DETAILED DESCRIPTION OF THE DRAWINGS

As described herein, vehicular travel requires that the equipment associated with the vehicle be in good working order so that dangerous traffic situations are reduced. Part of the maintenance of the vehicle includes proper cleaning of the vehicle including the windshield. The cleanliness of the windshield significantly reduces the possibility of the driver getting into an accident and, in some cases, is required by certain government agencies throughout the world. For example, under the United States Federal Motor Carrier Safety Regulations (FMCSR), specifically 49 CFR § 393.60, commercial motor vehicles (such as 18-wheelers and other cargo carriers) must have windshields free of obstructions. Drivers of these vehicles are responsible for ensuring that their view is not obscured by frost, snow, ice, or other debris. Individual states within the United States as well as other governments in other countries may also have similar laws as well as additional legal requirements that are designed to protect the public from damage or injury related to an obstructed view while a user is operating an 18-wheeler, other shipping and delivery vehicles, and other vehicles generally.

With commercial vehicles especially, it may be difficult to properly clean a windshield due to the height of the windshields. For example, a semi-trailer truck (also known as an 18-wheeler) may require the commercial driver to climb up to a precarious position in order to remove any dirt, bugs, and other debris that has accumulated over time during transit. The present disclosure relates to a windshield washer kiosk. In particular, the present disclosure relates to a windshield washer kiosk configured to enable a user to clean a surface of a vehicle, including a windshield. The windshield washer kiosk may be positioned at a location accessible to vehicle operators, including, for example, a fueling station, trucking stop, or other service location, such that a user may clean the surface of the vehicle while performing other activities, such as refueling.

In an embodiment, the present disclosure provides a windshield washer kiosk comprising a housing. A fluid delivery system is disposed within the housing. The fluid delivery system includes a fluid reservoir configured to store at least one fluid, a pump fluidically coupled to the fluid reservoir, and at least one fluid conduit. A washer wand is fluidically coupled to the fluid delivery system and configured to dispense the fluid. A payment interface is operatively coupled to a hardware processor. The hardware processor is configured to receive a payment authorization signal from the payment interface and, in response to receiving the payment authorization signal, activate the fluid delivery system to enable dispensing of the fluid through the washer wand.

The housing may be configured to contain and protect the fluid delivery system and associated components. In some embodiments, the housing may be constructed to resist environmental exposure and unauthorized access. The fluid reservoir may be configured to store at least one fluid, which may include a cleaning fluid. In some embodiments, the fluid delivery system may further include a mixing manifold fluidically coupled to the fluid reservoir and a water source. The hardware processor may be configured to selectively provide at least one of a pre-mixed cleaning fluid from the fluid reservoir, or a mixture of water and a detergent combined within the mixing manifold.

In some embodiments, the fluid delivery system may further comprise a plurality of fluid reservoirs, each configured to store a different cleaning fluid. A selection circuit may be operatively coupled to the hardware processor, wherein the hardware processor is configured to selectively control which of the plurality of fluid reservoirs supplies cleaning fluid to the fluid delivery system.

The washer wand may be fluidically coupled to the fluid delivery system and configured to dispense the fluid. In some embodiments, the washer wand may include a head portion through which the fluid is dispensed. In some embodiments, the windshield washer kiosk may further comprise a vibration motor and a vibrating weight operatively coupled to the vibration motor within a head portion of the washer wand to, when vibrated by the vibration motor, impart a vibrating motion to the head of the washer wand.

In some embodiments, the fluid delivery system may further comprise a plurality of electronically controlled valves fluidically coupled to the fluid delivery system. The hardware processor may be configured to selectively actuate the plurality of electronically controlled valves to define a plurality of fluid flow paths and operate the pump in a single flow direction while altering an effective direction of fluid movement through the fluid delivery system based on actuation of the plurality of electronically controlled valves. In some embodiments, the hardware processor may be further configured to establish an evacuation flow path configured to remove fluid from the washer wand and/or establish a recirculation flow path that returns the fluid to the fluid reservoir. In some embodiments, the windshield washer kiosk may further comprise at least one temperature sensor, wherein the hardware processor is configured to actuate the plurality of electronically controlled valves based on temperature data.

The payment interface may be configured to receive payment from a user. In some embodiments, the payment interface may be configured to receive payment via at least one of a near-field communication (NFC) device, a magnetic stripe card reader, a chip card reader, a mobile device-based payment application, a QR code-based payment system, or cash input. Upon receipt of a payment authorization signal, the hardware processor may activate the fluid delivery system to enable dispensing of the fluid through the washer wand.

In some embodiments, the present disclosure further provides a method of operating a windshield washer kiosk. The method may comprise receiving, at a payment interface, payment data from a user, authorizing the payment data, and activating, with a hardware processor, a fluid delivery system comprising a fluid reservoir configured to store at least one cleaning fluid, a pump fluidically coupled to the fluid reservoir, and at least one fluid conduit leading to a washer wand in response to authorizing the payment data. The method may further comprise dispensing, in response to user input, a cleaning fluid through the washer wand and monitoring for a session termination condition. In some embodiments, the method may further comprise monitoring environmental data and activating a heating element when a temperature threshold is met, actuating a pump in response to actuation of a trigger on the washer wand by a user, activating a vibration motor to vibrate a weight in response to actuation of a second trigger on the washer wand, evacuating fluid from the washer wand in response to detecting a temperature below a threshold, and selectively actuating a plurality of electronically controlled valves to define a plurality of fluid flow paths while operating a pump in a single flow direction and altering an effective direction of fluid movement through the fluid delivery system. In an embodiment, the heating element may be used to warm up the fluid to aid in the removal of debris and/or to prevent freezing of the fluid within the fluid reservoir and fluid channels described herein.

In some embodiments, the present disclosure further provides a windshield washer system comprising a first windshield washer kiosk including a first hardware processor, a second windshield washer kiosk including a second hardware processor, and a wireless communication interface configured to establish communication between the first and second windshield washer kiosks. The first hardware processor may be configured to receive a payment authorization and transmit session data to the second windshield washer kiosk. The second hardware processor may be configured to receive the session data and enable operation of a washer wand associated with the second windshield washer kiosk based on the received session data. In some embodiments, the first and second kiosks may synchronize remaining session time and/or synchronize fluid usage data. In some embodiments, the kiosks may be positioned on opposite sides of a vehicle service area. In some embodiments, at least one of the first or second windshield washer kiosks may further comprise a plurality of fluid reservoirs, each configured to store a different cleaning fluid, and a selection circuit operatively coupled to the respective hardware processor, wherein the hardware processor is configured to selectively control which of the plurality of fluid reservoirs supplies cleaning fluid to the washer wand.

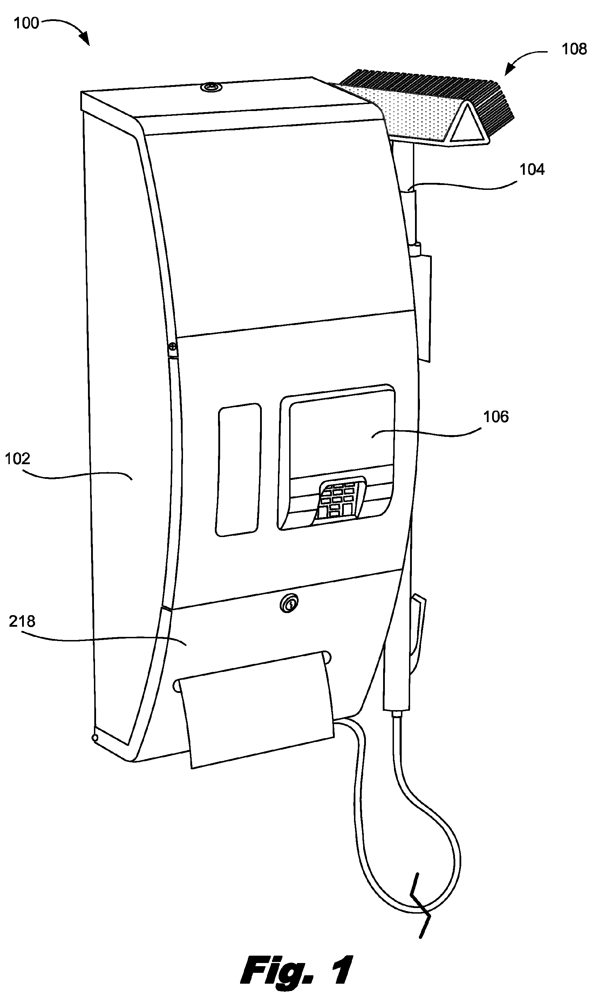

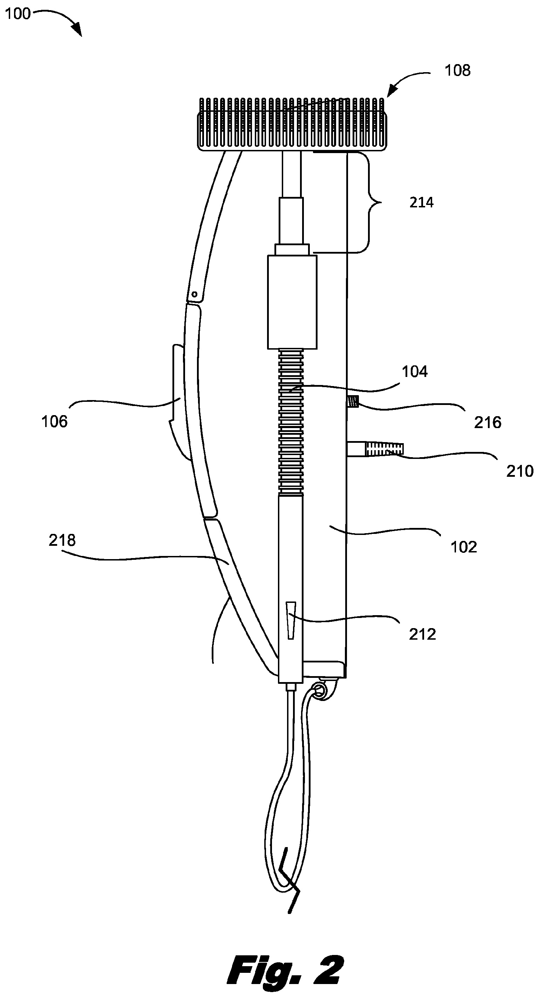

Turning now to the figures, Fig. 1 is a front perspective view diagram of a windshield washer kiosk 100 according to an embodiment of the principles described herein. Additionally, Fig. 2 is a side view diagram of a windshield washer kiosk 100 according to another embodiment of the principles described herein. These two figures show a windshield washer kiosk 100 that can be placed or mounted onto a wall or other support structure at or around height of a user. As described herein, the windshield washer kiosk 100 may be placed at a location convenient to a user such that the user may access a washer wand 104 of the windshield washer kiosk 100 in order to wash portions of the user's vehicle such as a windshield. In an embodiment, the windshield washer kiosk 100 may be placed at or near a gas pump at a gas station such that a user, while fueling the vehicle, may also engage with the windshield washer kiosk 100 as described herein.

In an embodiment, the windshield washer kiosk 100 may include a housing 102 used to prevent access to the interior portion of the windshield washer kiosk 100 by a user or other person. This housing 102 may be strong enough to prevent damage to the interior elements of the windshield washer kiosk 100 and may be secured to prevent attempts by a person from gaining access to the interior of the windshield washer kiosk 100. As such, in an embodiment, the housing 102 may be made of a sheet metal and may include locks, latches, or other securing elements that keeps the housing 102 closed unless an authorized user uses a key to open the housing 102.

The user may interact with the windshield washer kiosk 100 by first interacting with a payment interface 106. The payment interface 106 may allow a user to provide a payment in order to operate the windshield washer kiosk 100. By providing payment, in an example embodiment, the user may be allowed to operate the windshield washer kiosk 100 for a period of time that may be sufficient to clean, on average, a windshield of the vehicle as described herein. In an embodiment, the payment interface 106 may include a credit card/bank card pin pad and magnetic strip used to, when a credit card/bank card is supplied can transfer funds from the user to the payment interface 106. Alternatively, or additionally, the payment interface 106 may include a cash and coin interface that allows the user to insert cash and/or coins into the payment interface 106 in order to operate the windshield washer kiosk 100. Other payment options such as near-field communication (NFC) chip interfaces, biometric interfaces, RFID interfaces, contactless payment interfaces, prepaid code interfaces, and cash payment applications executing on the user's smartphone all to be used to allow the transfer of payment from the user to the payment interface 106.

In an embodiment, the windshield washer kiosk 100 may include a hardware processor (not shown) that interfaces with the payment interface 106 to, when payment is confirmed, causes the elements within the windshield washer kiosk 100 to operate to provide the user with a mixture of detergent and water to be ejected from a terminal end of the washer wand 104. In an embodiment, this hardware processor may, based on the transaction at the payment interface 106, cause a certain detergent and amount of detergent to be mixed with a certain amount of water via operation of a detergent and water mixing manifold. The hardware processor may also operate a fluid pump that causes the detergent and water mixture to be ejected out of the terminal end of the washer wand 104. In an embodiment, the fluid pump may create a high pressure to the flow of the detergent and water mixture within the washer wand 104 to add to the user's ability to dislodge debris from off of the surface of the windshield as described herein.

As shown in Figs. 1 and 2, the windshield washer kiosk 100 includes the washer wand 104 to be used by the user to wash a vehicle such as the windshield of the vehicle. The washer wand 104 may include a variety of elements that allow the user to increase the efficacy of washing the windshield of the vehicle. In an embodiment, a terminal end of the washer wand 104 may include a brush portion 108. This brush portion 108 may be used by the user to scrub surface debris from the surface of the windshield. In an embodiment, the brush portion 108 of the washer wand 104 may also include other implements such as a squeegee portion that may be used to remove liquids from the surface of the windshield. In this embodiment, the squeegee portion may be formed opposite the brush of the brush portion 108 at the terminal end of the washer wand 104 such that, during use, the user may scrub the surface of the windshield using the brush portion 108 and rotate the washer wand 104 one-hundred and eighty degrees to wipe any fluids from off of the surface of the windshield using the squeegee portion. It is appreciated that other implements, different brush types, and other instruments may be affixed to the terminal end of the washer wand 104 at the brush portion 108 that best facilitates the user in cleaning off the surface of the windshield.

The washer wand 104, in an embodiment, may also include a wand trigger 212. The wand trigger 212 may allow the user to determine when the detergent and water mixture is sprayed from the terminal end of the washer wand 104. Thus, during operation, the user may press the wand trigger 212 when the user wants an amount of detergent and water mixture to be emitted from the terminal end of the washer wand 104.

The washer wand 104, in an embodiment, may also include a wand telescoping section 214. The wand telescoping section 214 may allow a user to selectively change the length of the washer wand 104 so that the user may more conveniently wash the windshield. In an embodiment, the wand telescoping section 214 may include a twist locking system that allows a user to lock the wand telescoping section 214 at a certain length.

As described herein, the windshield washer kiosk 100 may mix a portion of detergent and water together within the housing 102 of the windshield washer kiosk 100 prior to the detergent and water mixture being emitted from the terminal end of the washer wand 104 after the use has actuated the wand trigger 212. Thus, in an embodiment, the windshield washer kiosk 100 may be fluidically coupled to a water supply via a water supply connection 210 as shown in Fig. 2. This water supply connection 210 may be connected to any culinary water supply and may be under a certain pressure such that the pressurization of the detergent and water mixture within the housing 102 of the windshield washer kiosk 100 via the pump may be supplemented by this water pressure as well. In an embodiment, the water supply connection 210 may be fluidically coupled to an underground tank of water where available. It is appreciated that some locations where the windshield washer kiosk 100 is placed may not have ready access to a direct water supply and may need an external tank to be periodically filled with water in order to operate the windshield washer kiosk 100. As such, the windshield washer kiosk 100 may be placed at a location such as a gas station before, during, or after construction of the facilities and still be capable of accessing water for the detergent and water mixture described herein. As such, it is further appreciated that certain constructions may be made to hold the windshield washer kiosk 100 in place such as a pedestal stand, a framed stand, or other mounting constructions that would hold the windshield washer kiosk 100 in place. In an embodiment, wall mounting brackets may be used to secure the windshield washer kiosk 100 to existing structures such as pillars or brick/concrete walls. The ability to couple the windshield washer kiosk 100 to any constructed or current structure allows for flexibility in placement at locations regardless of the current construction status of the location.

In an embodiment, the windshield washer kiosk 100 may also include a power source interface 216. The power source interface 216 may allow the windshield washer kiosk 100 to be operatively coupled to a power source such as a power source that operates fuel pumps at a fuel station. The power source may, via a transformer and other circuitry, provide the necessary power to the hardware processor and the payment interface 106 as described herein.

It is appreciated that the windshield washer kiosk 100 may include other features that increase the convenience of the windshield washer kiosk 100. For example, a portion of the housing 102 of the windshield washer kiosk 100 may include a towel dispensing housing 218. The towel dispensing housing 218 may house a spool and roll of towels for the user to use while operating the washer wand 104. In an embodiment, the spool may be operatively coupled to a motor that dispenses paper towels to the user when needed such as when a motion sensor detects the presence of the user's hand. In an embodiment, the user, after providing the user's payment at the payment interface 106, may dispense a predetermined number of or length of paper towels from the roll of paper towels using the motor to rotate the spool.

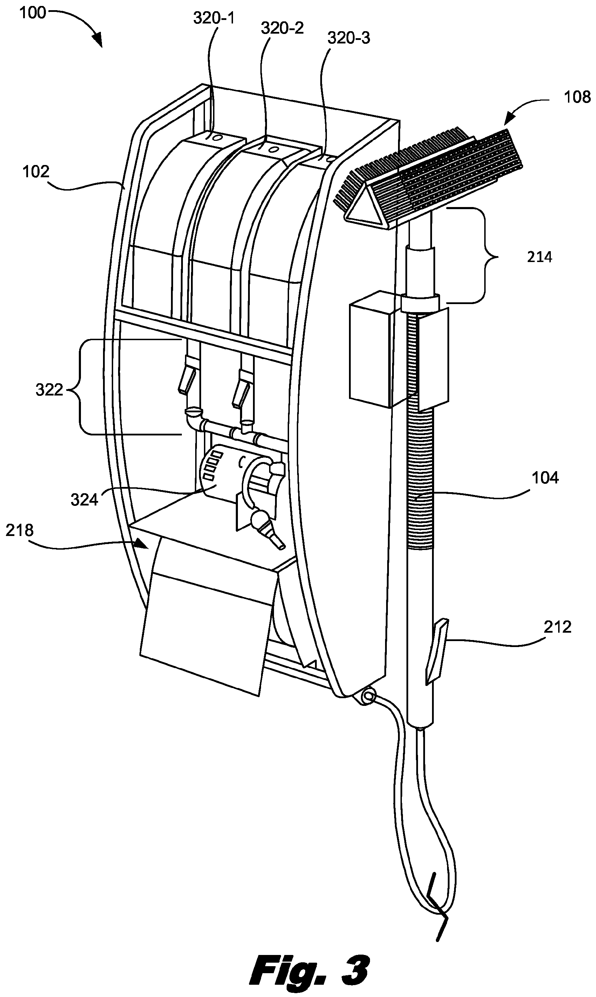

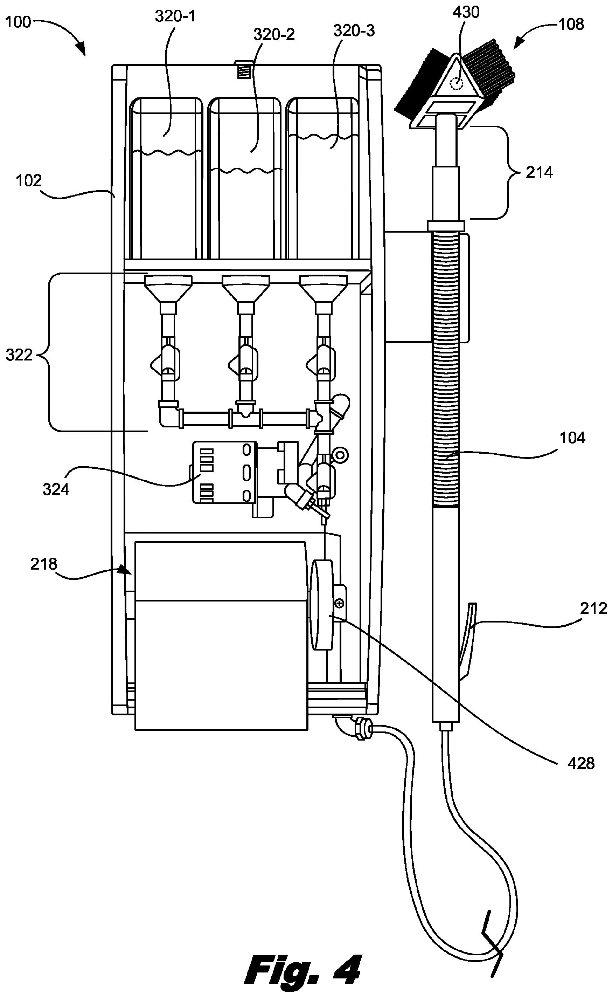

Fig. 3 is a front perspective view diagram of the windshield washer kiosk 100 with a plurality of housing covers removed to show the interior portions of the windshield washer kiosk 100 according to an embodiment of the principles described herein. Fig. 4 is a front perspective view diagram of the windshield washer kiosk with a plurality of housing covers removed to show the interior portions of the windshield washer kiosk according to another embodiment of the principles described herein. Figs. 3 and 4 show that the interior portion of the windshield washer kiosk 100 may be segmented into three different sections. A first section may include one or more detergent reservoirs 320-1, 320-2, 320-3. A second section may include a detergent and water mixing manifold 322 and a pump 324. As described herein, a third section may include a spool 428 and a roll of towels 326 within the towel dispensing housing 218.

The windshield washer kiosk 100 shown in Fig. 3 includes those similar elements as those shown and described in connection with Figs. 1 and 2. For example, the windshield washer kiosk 100 includes a housing 102 to house the interior elements described herein. The windshield washer kiosk 100 also includes the washer wand 104, the brush portion 108, the wand trigger 212, and the wand telescoping section 214 as described herein.

With the removal of portions of the housing 102, Fig. 3 shows the first section that includes a plurality of detergent reservoirs 320-1, 320-2, 320-3. In the example embodiment shown in Fig. 3, the first section of the housing houses three detergent reservoirs 320-1, 320-2, 320-3. In an embodiment, each of the detergent reservoirs 320-1, 320-2, 320-3 may contain different types of detergents that may perform different functions. In an example embodiment, these different types of detergents may serve different goals, climate conditions, and desired environmental impacts. For example, the one of the detergents held in any of the detergent reservoirs 320-1, 320-2, 320-3 may be a general-purpose windshield cleaning detergent that may include mild surfactants, alcohols, and other ingredients. In another example, one of the detergents held in any of the detergent reservoirs 320-1, 320-2, 320-3 may include a bug remover detergent specifically formulated to remove dead bug matter from the surface of the windshield. In this example embodiment, this bug remover detergent may include stronger surfactants, enzyme-based surfactants, and other solvents like d-limonene that can all be used to break down insect residue and matter as well as other organic debris from surfaces of the vehicle. In another embodiment, one of the detergents held in any of the detergent reservoirs 320-1, 320-2, 320-3 may include a deicing or winter-grade detergent that include surfactants that have added silicone or fluoropolymer compounds that cleans those surfaces while also depositing a water-repellant coating that enhances visibility during rain or snow. In this embodiment, a deicing solution may also be added to prevent the formation of ice or the accumulation of snow on the surface of a windshield. Still further, in other example embodiments, one of the detergents held in any of the detergent reservoirs 320-1, 320-2, 320-3 may include an environmentally-friendly (e.g., eco-friendly) or biodegradable detergent that may include plant-based surfactants that are phosphate free and alcohol free thereby minimizing environmental impacts through the use of the windshield washer kiosk 100. In an embodiment, the any of the detergents may include other additives that facilitate the cleaning of the windshield. In an embodiment, these additives may include a foaming agent. This foaming agent may promote the formation of foam or lather when the detergent is used. This allows the detergent to lift and trap dirt and oils from off of the surface of the windshield or other cleaned surface. In an embodiment, these detergents may be concentrated detergents that include ingredients that can be diluted with water using the water supply connection (e.g., Fig. 2, 210) as described in connection with Fig. 2, for example. It is appreciated that any optional additives may be included with the detergents that includes, but is not limited to, fragrances, colorants, anti-fogging agents, ultraviolet stabilizers, and/or pH adjusters or buffers.

In order to mix these detergents maintained within any of the detergent reservoirs 320-1, 320-2, 320-3 with water, the windshield washer kiosk 100 may include the detergent and water mixing manifold 322. In an embodiment, the detergent and water mixing manifold 322 may be fluidically coupled to the water source via the water supply connection as well as each of the individual detergent reservoirs 320-1, 320-2, 320-3. In an embodiment, the fluid coupling between each of the detergent reservoirs 320-1, 320-2, 320-3 and the detergent and water mixing manifold 322 may include a valve the may be selectively opened and closed. In this embodiment, based on the payment made by the user, the valves may be selectively opened and closed such that a valve associated with a detergent reservoir 320-1, 320-2, 320-3 holding the detergent that the user has paid for is opened allowing some of the paid-for detergent to be mixed with the water as described herein. The electrical valves of this detergent and water mixing manifold 322 may, therefore, be electrically coupled to the hardware processor that directs which valve or valves to be opened and closed based on the purchases of the users of the windshield washer kiosk 100.

Downstream of the detergent and water mixing manifold 322, the windshield washer kiosk 100 may also include a pump 324 used to pump the various fluids from the water source and detergent reservoirs 320-1, 320-2, 320-3 to the washer wand 104. This pump 324 may include a high-pressure pump that forces the detergent and water mixture to the washer wand 104 for the detergent and water mixture to be forced (e.g., 100-1000 psi), at high speeds, out of a terminal end of the washer wand 104. This allows the washer wand 104 to act as a high-pressure washer for use by the user when attempting to remove debris from the surface of the windshield. In another embodiment, the pump 324 may be a low-pressure pump (e.g., imparting 20-50 psi) that allows the detergent and water mixture to be expelled out of the terminal end of the washer wand 104 when the user actuates the wand trigger 212. In yet another embodiment, the pump 324 may be a variable pressure pump system that interfaces with a variable-position wand trigger 212 or other multi-stage actuator that allows the user to modulate the pressure. For example, as the user performs a light-squeeze on the wand trigger 212 by moving the wand trigger 212 a short distance, a low pressure of detergent and water mixture may be expelled from the terminal end of the washer wand 104. Where, however, the user performs a firm-squeeze on the wand trigger 212 moving the wand trigger 212 a lager distance, a high pressure of detergent is ejected from the terminal end of the washer wand 104. This enables the user to adjust the flow rate and pressure of the detergent and water mixture from the washer wand 104 allowing, for example, the user to use the high pressure mode to dislodge debris from the surface of the windshield while also allowing the user to scrub the surface of the windshield with the brush portion 108 of the washer wand 104 while expelling detergent and water mixture at a lower pressure.

In yet another example embodiment, the pump 324 may be operated by the hardware under a preprogrammed scenario implementing preprogrammed pressure modes. In this example, the pressure settings could be digitally controlled by the hardware processor via the windshield washer kiosk 100 interface the selectable modes. Alternatively, the hardware processor of the windshield washer kiosk 100 may initiate notifications (e.g., a beeping noise) to the user when the pressure modes are changed from a high pressure mode to a low pressure mode. Feedback sensors or flow regulators could be used by the hardware processor to maintain a consistent output regardless of the input pressure fluctuations due to the water source pressure, for example. It is appreciated that the detergent and water mixture, the selected or selectable pressure, and the time of use of the windshield washer kiosk 100 may be dictated by the specific purchase made at the payment interface (e.g., Fig. 1, 106) by the user.

As described herein and shown in Fig. 4, the brush portion 108 of the washer wand 104 may include a vibrating weight 430. The vibrating weight 430 embedded in the brush portion 108 of the washer wand 104 can be activated using either electrical or fluidic means in the embodiments herein. Where the vibrating weight 430 is electrically driven, the vibrating weight 430 is mechanically coupled to a small electric motor (e.g., a DC micro motor or eccentric rotating mass (ERM) motor) housed within or near the brush portion 108 of the washer wand 104. The small electric motor may be activated via an electrical signal from the hardware processor and may also be powered using the power source described herein. Thus, in an embodiment, along with the fluidic channels formed from the pump 324 to the terminal end of the washer wand 104 at the brush portion 108, an electrical line may also be formed along the length of the washer wand 104 and operatively couple the hardware processor and other circuitry to this small electric motor within the brush portion 108 to vibrate the vibrating weight 430. Alternatively, the vibrating weight 430 may be vibrated using a fluidic driven method such as hydraulic or pneumatic activation. In this embodiment, the vibrating weight 430 may be vibrated by the flow of the detergent and water mixture passing through vias (e.g., fluid channels) formed in the brush portion 108 of the washer wand 104. This example system uses fluid dynamics to induce mechanical oscillation on the vibrating weight 430. A series of specifically-shaped or angled internal vias may direct fluid into a vane, rotor, or pressure chamber associated with the vibrating weight to vibrate the vibrating weight 430. In either example, the vibration of the vibrating weight 430 may impart a vibration to the brush portion 108 of the washer wand 104 such that the bristles of the brush portion 108 may vibrate at high speeds in order to help with the dislodging of debris from the surface of the windshield.

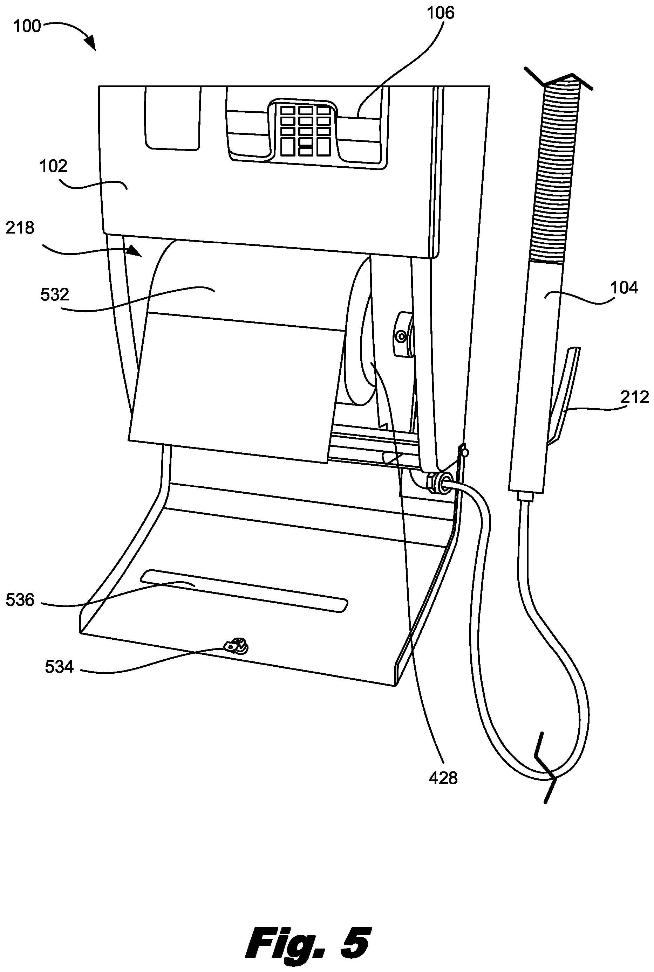

Fig. 5 is a front perspective view diagram of the windshield washer kiosk 100 with a cover of the towel dispensing housing 218 opened to show the interior portions of the towel dispenser apparatus of the windshield washer kiosk 100 according to an embodiment of the principles described herein. As described herein, the windshield washer kiosk 100 may be separated into individual housing within the housing 102 of the windshield washer kiosk 100 with the towel dispensing housing 218 being one of those housings. The view presented in Fig. 5 also shows other elements of the windshield washer kiosk 100 descried herein such as the housing 102, the washer wand 104, the wand trigger 212, and the payment interface 106.

Fig. 5 shows that a housing cover of the towel dispensing housing 218 in an opened state. The towel dispensing housing 218 may be opened by an operator using a key to open a towel section locking mechanism 534. This key may be proprietary such that a user or other human cannot gain access to the towel dispensing housing 218 without the proprietary key. This prevents users and potential vandals from gaining unlimited access to the roll of paper towels 532.

As described herein, the towel dispensing housing 218 may house a spool 428 that selectively allows the roll of paper towels 532 to be rotated. Again, in an embodiment, the spool 428 may be operatively coupled to a motor that dispenses paper towels of the roll of paper towels 532 to the user when needed such as when a motion sensor detects the presence of the user's hand. In an embodiment, the user, after providing the user's payment at the payment interface 106, may dispense a predetermined number of or length of paper towels from the roll of paper towels 532 using the motor to rotate the spool 428. The selected number or length of paper towels of the roll of paper towels 532 may be passed out of the towel dispensing housing 218 via a towel port 536 as similarly shown in Figs. 1 and 2 for example. In an embodiment, a sensor such as an infrared sensor may be used to detect when the roll of paper towels 532 has been used. When the sensor detects that the paper towels of the roll of paper towels 532 has been exhausted, a signal may be sent to the hardware processor of the windshield washer kiosk 100. When this occurs, the hardware processor may cause a light to blink, indicating to an operator or owner of the exhaustion of the roll of paper towels 532. Additionally, or alternatively, the windshield washer kiosk 100 may include a wireless interface adapter and antenna that allows wireless transmissions to be sent to the owner or operator of the windshield washer kiosk 100 notifying the owner or operator of the exhaustion of the roll of paper towels 532. Additionally, the wireless interface adapter may be used to inform the owner or operator of the exhaustion of the detergent and water mixture maintained within the detergent reservoirs described herein. It is appreciated that the owner or operator of the windshield washer kiosk 100 may receive these notifications wirelessly at a computing device such as a smartphone, a laptop computer, or a desktop computer. These notifications may be received at these computing devices that are executing computer-readable program code instructions of a windshield washer kiosk maintenance software application. This windshield washer kiosk maintenance software application may inform the owner or operator of the current conditions of the windshield washer kiosk 100 such as the current capacity of the cash/coin bins, current levels of detergent held within each of the detergent reservoirs, current amount of paper towels, and other diagnostics of the windshield washer kiosk 100 such as errors detected at the payment interface and usage levels of the windshield washer kiosk 100 that would facilitate the owner or operator in maintaining the operation of the windshield washer kiosk 100.

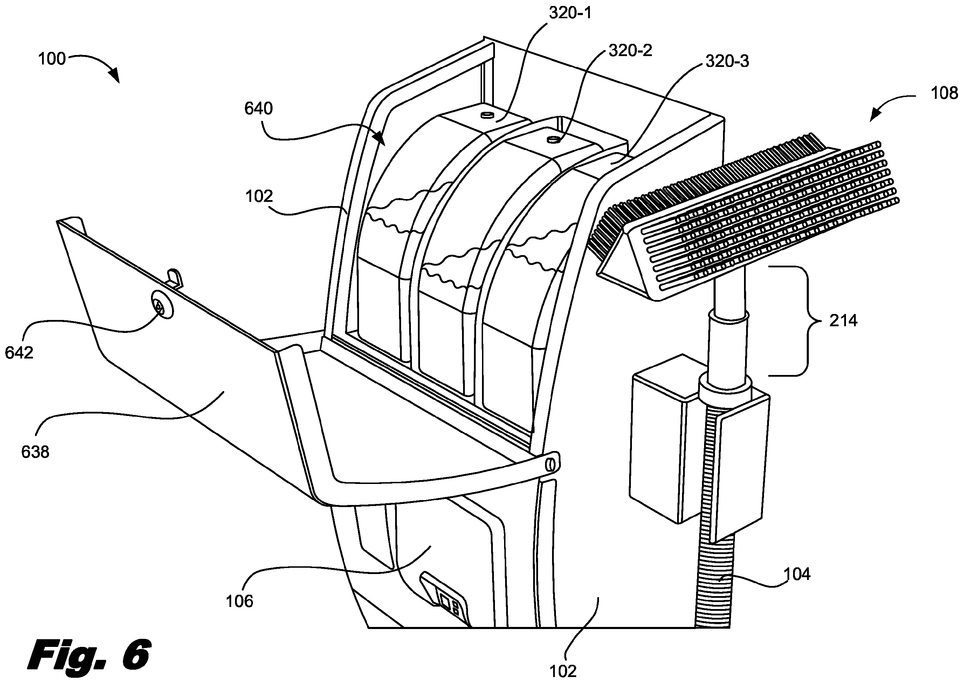

Fig. 6 is a side perspective view diagram of the windshield washer kiosk 100 with a detergent reservoir housing cover 638 opened to show the interior portions of the detergent reservoir housing of the windshield washer kiosk according to an embodiment of the principles described herein. As described herein, the windshield washer kiosk 100 may be separated into individual housing within the housing 102 of the windshield washer kiosk 100 with the detergent reservoir housing 640 being one of those housings. The view presented in Fig. 6 also shows other elements of the windshield washer kiosk 100 descried herein such as the housing 102, the washer wand 104, the brush portion 108 of the washer wand 104, and the payment interface 106.

Fig. 6 shows that the detergent reservoir housing cover 638 of the detergent reservoir housing 640 is in an opened state. The detergent reservoir housing 640 may be opened by an operator using a key to open a detergent section locking mechanism 642. This key may be proprietary such that a user or other human cannot gain access to the detergent reservoir housing 640 without the proprietary key. This prevents users and potential vandals from gaining unlimited access to the detergent reservoirs 320-1, 320-2, 320-3.

Again, each of the detergent reservoirs 320-1, 320-2, 320-3 may contain different types of detergents that may perform different functions. In an example embodiment, these different types of detergents may serve different goals, climate conditions, and desired environmental impacts. For example, the one of the detergents held in any of the detergent reservoirs 320-1, 320-2, 320-3 may be a general-purpose windshield cleaning detergent that may include mild surfactants, alcohols, and other ingredients. In another example, one of the detergents held in any of the detergent reservoirs 320-1, 320-2, 320-3 may include a bug remover detergent specifically formulated to remove dead bug matter from the surface of the windshield. In this example embodiment, this bug remover detergent may include stronger surfactants, enzyme-based surfactants, and other solvents like d-limonene that can all be used to break down insect residue and matter as well as other organic debris from surfaces of the vehicle. In another embodiment, one of the detergents held in any of the detergent reservoirs 320-1, 320-2, 320-3 may include a deicing or winter-grade detergent that include surfactants that have added silicone or fluoropolymer compounds that cleans those surfaces while also depositing a water-repellant coating that enhances visibility during rain or snow. In this embodiment, a deicing solution may also be added to prevent the formation of ice or the accumulation of snow on the surface of a windshield. Still further, in other example embodiments, one of the detergents held in any of the detergent reservoirs 320-1, 320-2, 320-3 may include an environmentally-friendly (e.g., eco-friendly) or biodegradable detergent that may include plant-based surfactants that are phosphate free and alcohol free thereby minimizing environmental impacts through the use of the windshield washer kiosk 100. In an embodiment, the any of the detergents may include other additives that facilitate the cleaning of the windshield. In an embodiment, these additives may include a foaming agent. This foaming agent may promote the formation of foam or lather when the detergent is used. This allows the detergent to lift and trap dirt and oils from off of the surface of the windshield or other cleaned surface. In an embodiment, these detergents may be concentrated detergents that include ingredients that can be diluted with water using the water supply connection (e.g., Fig. 2, 210) as described in connection with Fig. 2, for example. It is appreciated that any optional additives may be included with the detergents that includes, but is not limited to, fragrances, colorants, anti-fogging agents, ultraviolet stabilizers, and/or pH adjusters or buffers.

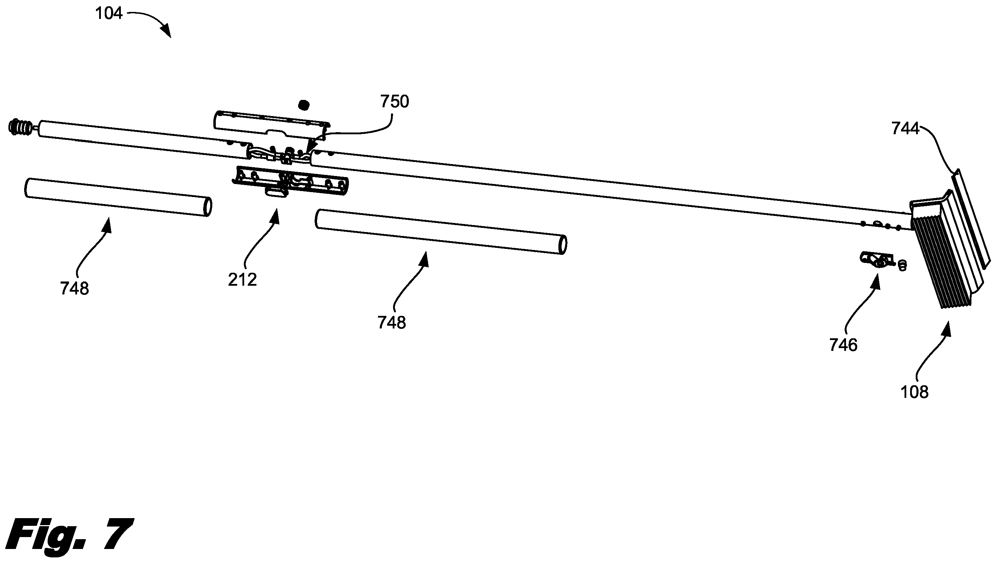

Fig. 7 is a top and side perspective view diagram of a washer wand 104 of the windshield washer kiosk according to an embodiment of the principles described herein. Fig. 7 shows a variety of devices that may be operatively coupled to the terminal end of the washer wand 104 described herein. The washer wand 104 may include a variety of elements that allow the user to increase the efficacy of washing the windshield of the vehicle. In an embodiment, a terminal end of the washer wand 104 may include a brush portion 108. This brush portion 108 may be used by the user to scrub surface debris from the surface of the windshield.

In an embodiment, the brush portion 108 of the washer wand 104 may also include other implements such as a squeegee portion 744 that may be used to remove liquids from the surface of the windshield or other surface of a vehicle such as mirrors. In an embodiment, these liquids may be provided onto the surface of the windshield or other surface of the vehicle via a sprayer portion 746. This sprayer portion 746 may be fluidically coupled to the detergent and water mixing manifold (e.g., Fig. 3, 322) and the pump (e.g., Fig. 3, 324) described in connection with, for example, Fig. 3. In a specific embodiment, a supply hose (not shown) may be operatively coupled to a proximal end of the washer wand 104 opposite the squeegee portion 744 and brush portion 108 to supply that mixed detergent and water mixture to the sprayer portion 746. In an embodiment, the washer wand supply hose 750 may run through a length of the shaft of the washer wand 104 terminating at the sprayer portion 746 for the user to deliver the detergent and water mixture to the surface being washed.

In an embodiment, the squeegee portion 744 may be formed opposite the brush of the brush portion 108 at the terminal end or distal end of the washer wand 104 such that, during use, the user may scrub the surface of the windshield using the brush portion 108 and rotate the washer wand 104 one-hundred and eighty degrees to wipe any fluids from off of the surface of the windshield using the squeegee portion. It is appreciated that other implements, different brush types, and other instruments may be affixed to the terminal end of the washer wand 104 at the brush portion 108 that best facilitates the user in cleaning off the surface of the windshield or other surface of the vehicle such as mirrors.

It is appreciated that, in some embodiments, the attachments at the terminal end of the washer wand 104 may be modified either by the operator of the windshield washer kiosk (e.g., Fig. 1, 100) or an employee in charge of maintenance of the washer kiosk. For example, the user may be allowed to swap out a brush portion 108 for a squeegee portion 744 or vice versa in order to facilitate, during cleaning, various cleaning goals. Alternatively, the owner/maintainer of the windshield washer kiosk may swap out worn out devices (e.g., a brush portion 108 with defective bristles due to use) so that the cleaning ability of the windshield washer kiosk is maintained. It is also appreciated that these swappable devices placed at the terminal end of the washer wand 104 may allow for or stop water flow from out of the end of the washer wand 104. For example, the terminal end of the washer wand 104 shown in Fig. 7 includes a dual-device with the squeegee portion 744 on one side and the brush portion 108 on an opposite side. In an embodiment, the brush portion 108 may include fluidic vias that allow the detergent and water mixture to pass through so that the detergent and water mixture may be infused into the brush head of the brush portion 108. In some embodiments, however, the squeegee portion 744 may include a fluid stopper that plugs the fluidic via or does not have a fluidic via such that water cannot flow from the squeegee portion 744 as the user is using the squeegee portion 744 to wipe fluid from off of the surfaces being cleaned. It is appreciated that an electric switch or physical button may be formed into the head portions of the washer wand 104 in order to allow or prevent such water flow out of the brush portion 108 or squeegee portion 744, respectively.

The washer wand 104, in an embodiment, may also include a wand trigger 212. The wand trigger 212 may allow the user to determine when the detergent and water mixture is sprayed from the terminal end of the washer wand 104. Thus, during operation, the user may press the wand trigger 212 when the user wants an amount of detergent and water mixture to be emitted from the terminal end of the washer wand 104 such as out of the sprayer portion 746. The wand trigger 212, therefore, allows the user to selectively apply any amount of detergent and water mixture to be applicated to a surface of the vehicle as needed during the washing process. It is appreciated that the washer wand 104 may include multiple triggers. For example, a first wand trigger 212 may, when actuated by the user, allow for the water and detergent mixture to be emitted out of the sprayer portion 746 while a second wand trigger 212 may, when actuated by a user, allow for the water and detergent mixture to be emitted at and infused into the brush portion 108 in order to allow for scrubbing using the brush portion 108.

As described herein, the washer wand 104 may have a telescopic portion that allows the length of the washer wand 104 to be increased or decreased based on the height of vehicle being washed and the ability of the user to access the windshield of the vehicle via the washer wand 104, for example. It is also appreciated that the personnel responsible for maintaining the washer kiosk and the washer wand 104 can permanently extend or decrease the length of the washer wand 104 using one or more of a plurality of wand extender sections 748. Thus, in an embodiment, the personnel responsible for maintaining the washer kiosk and the washer wand 104 can operatively couple the wand extender sections 748 to a proximal or a distal end of the washer wand 104 in order to extend, permanently, the length of the washer wand 104 for users to use. In a specific embodiment, the washer wand 104 may include a disassembly section intermediate to the proximal and distal end of the washer wand 104 where these wand extender sections 748 may be coupled into the length of the washer wand 104. The personnel responsible for maintaining the washer kiosk and the washer wand 104 may also gain access to additional lengths of washer wand supply hose 750 that is, in one example embodiment, bundled within the current shaft of the washer wand 104. Alternatively, an additional section of washer wand supply hose 750 may be provided such that the additional section of washer wand supply hose 750 may be operatively coupled to the existing length of the washer wand supply hose 750 so that the washer wand supply hose 750 may extend along the length of the washer wand 104. Thus, although FIG. 7 does not show a washer wand 104 that includes a wand telescoping section (e.g., FIGS. 2, 4, and 6 214), the present specification contemplates that the washer wand 104 may be operatively telescopic or otherwise adjustable using the wand extender sections 748 as described herein.

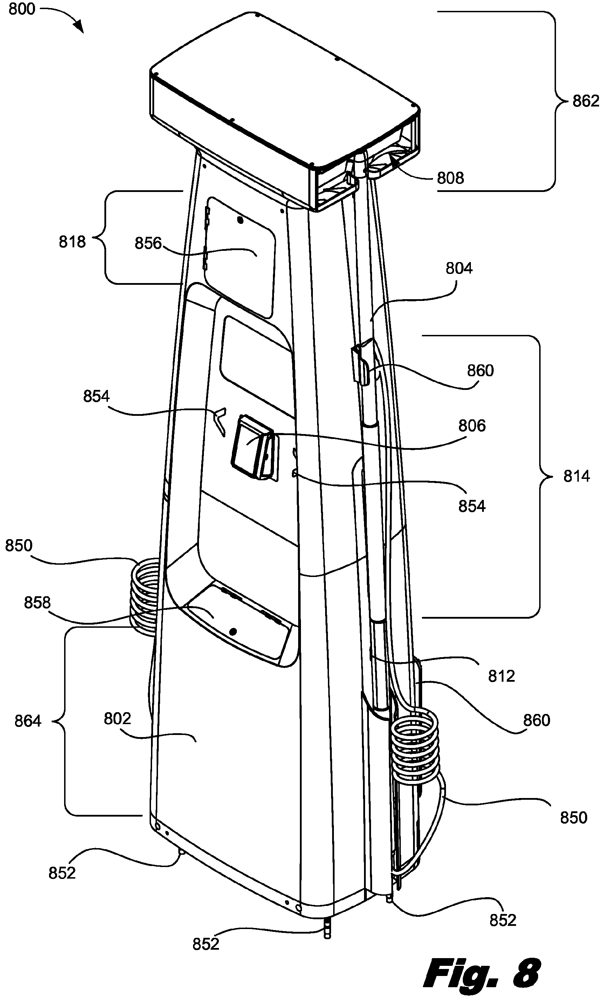

Fig. 8 is a perspective view of a windshield washer kiosk 800 according to another embodiment of the principles described herein. As shown in Fig. 8, the windshield washer kiosk 800 is shown as a ground-mounted or ground-coupled windshield washer kiosk 800 such that the windshield washer kiosk 800 may be built into a floor structure such as concrete. In an embodiment, the mounting of the windshield washer kiosk 800 to the ground, such as at a refueling station, may be done using mounting bolts 852 formed into a bottom of the housing 802. These mounting bolts 852 may be drilled into or otherwise secured into a concrete floor such that the windshield washer kiosk 800 may be secured in place. In an embodiment, the securing of the windshield washer kiosk 800 to the ground may be done such that mounting bolts 852 raise the windshield washer kiosk 800 roughly 18 inches so as to keep the bottom of the windshield washer kiosk 800 above the vapor barrier. In some instances, construction codes may require the windshield washer kiosk 800 to be raised this height in order to separate the windshield washer kiosk 800 from ground-level moisture, cold air, and environmental exposure. This height may also prevent freezing of the fluids within the windshield washer kiosk 800 as well as improve drainage of the excess fluids on the head of the washer wands 804 as described herein.

In the embodiment shown in Fig. 8, the windshield washer kiosk 800 includes two washer wands 804 that allow two different users to operate the windshield washer kiosk 800. Fig. 8 shows a first washer wand 804 that is retained to a first side of the windshield washer kiosk 800 with a second washer wand 804 (not shown in Fig. 8) retained to a second side of the windshield washer kiosk 800. In an embodiment, each of the first and second washer wand 804 may be retained at their respective sides of the windshield washer kiosk 800 via one or more washer wand mounts 860 that are formed to holed the washer wands 804 in place when not in use. As shown in Fig. 8, each of the washer wands 804 may include a brush portion 808, a squeegee portion (not shown in Fig. 8), or other attachments as described herein. Additionally, as shown in Fig. 8, each washer wand 804 may include a wand trigger 812 that, when actuated by a user, allows a flow of detergent and water mixture to flow through the washer wand supply hose (e.g., Fig. 7, 750) housed in the washer wand 804 and out of the sprayer portion (e.g., Fig. 7, 746) of the washer wand 804.

It is appreciated that a length of the washer wand supply hose 850 may be formed between a fluid reservoir formed within the housing 802 and a proximal end of the washer wands 804. This washer wand supply hose 850 may allow a user to pull the washer wands 804 away from the windshield washer kiosk 800 and to the user's vehicle. In some embodiments, each of the washer wands 804 may include a wand telescoping section 814 that may allow the length of the shaft of the washer wands 804 to be extended or shortened.

When not in use, the washer wands 804 may be placed in washer wand mounts 860. The washer wand mounts 860 are shown in Fig. 8 as being formed on the sides of the windshield washer kiosk 800. In an embodiment, the washer wand mounts 860 may include clips or other surfaces that conform around the washer wands 804 so that the washer wands 804 are retained at the windshield washer kiosk 800 when not in use.

In an embodiment, the windshield washer kiosk 800 may be secured to a cement floor between two fueling lanes, for example, at a fueling station such that the first washer wand 804 may be used by a user occupying a first fueling lane with their vehicle and the second washer wand 804 ay be used by another user occupying a second fueling lane with their vehicle. This allows multiple users to operate the windshield washer kiosk 800 concurrently.

The windshield washer kiosk 800 may also include a payment validation system 806. The user may interact with the payment validation system 806 in order to activate the windshield washer kiosk 800 and begin to wash the user's vehicle and apply water and or detergent onto the vehicle using the sprayer portion (Fig. 7, 746) of the washer wand 804. In an embodiment, the payment validation system 806 may include a credit card reader that accepts payment for the services provided by the windshield washer kiosk 800. Additionally, or alternatively, the payment validation system 806 may include a quick-response (QR) code that a user may scan using, for example, a smartphone. By scanning the OR code associated with the payment validation system 806, the user may access a website or software application executing on the smartphone and provide payment wirelessly to the windshield washer kiosk 800. In an embodiment, therefore, the windshield washer kiosk 800 may include a wireless coupling device such as a wireless interface adapter or network interface device the operatively couples the windshield washer kiosk 800 to an intranet or the internet so that payment input at the user's smartphone may be identified and accepted, wirelessly, at the windshield washer kiosk 800. In an embodiment, the payment validation system 806 may also include the use of a software application executing on, for example, the user's smartphone that, when the user provides payment details, transmits authentication data indicating, wirelessly, to the windshield washer kiosk 800 that payment has been received and activation of at least one of the washer wands 804 for use by the user is authorized.

When payment is received and use of the windshield washer kiosk 800 by the user is authorized, one or more light emitting diodes (LEDs) 854 may be activated in order to indicate to the user which of the plurality of washer wands 804 to use. Because the washer wands 804 are on opposite sides of the windshield washer kiosk 800 the LEDs 854 may, via an arrow LED lighting system for example, which of the washer wands 804 should be used. It is appreciated that other types of LED 854 lighting systems may be used in order to indicate to the user which of the washer wands 804 should be used. In some embodiments, LEDs 854 may also be formed into any part of the housing 802 of the windshield washer kiosk 800 in order to provide additional lighting at night. For example, white LEDs 854 may be formed into the housing 802 of the windshield washer kiosk 800 at or near the payment validation system 806 and near the individual washer wands 804 so that a user may interface with the payment validation system 806 and use the washer wands 804. It is appreciated that the washer wands 804 depicted in Fig. 8 may include any type of washer wand described herein such as those shown and described in Figs. 1 though 7.

In some embodiments, the windshield washer kiosk 800 may be configured to communicate wirelessly with one or more additional windshield washer kiosks positioned nearby, such as an adjacent windshield washer kiosk located on an opposite side of a vehicle service area. The hardware processor of the windshield washer kiosk 800 may be operatively coupled to a wireless communication interface configured to establish a communication link with one or more neighboring kiosks over a local wireless network. Through this communication link, multiple windshield washer kiosk 800 may coordinate operation such that a single user session may be shared across two or more windshield washer kiosks. For example, when a vehicle such as a truck is positioned between two adjacent windshield washer kiosk 800, a user may initiate a single payment transaction at one windshield washer kiosk 800, and the authorized session may be communicated to the adjacent kiosk such that washer wands 804 associated with both kiosks are enabled for use during the same session.

In this manner, the system allows a user to selectively utilize a first washer wand 804 positioned on a first side of the vehicle and a second washer wand 804 positioned on an opposite side of the vehicle without requiring separate payment transactions. The hardware processors of the respective windshield washer kiosk 800 may synchronize session parameters including remaining usage time, fluid usage, and activation status such that operation of both windshield washer kiosks 800 is coordinated under the single authorized session. In some embodiments, one windshield washer kiosk 800 may function as a primary kiosk that processes the payment validation system 806, while the adjacent windshield washer kiosk 800 operates as a secondary windshield washer kiosk 800 that receives session authorization data from the primary windshield washer kiosk 800. This coordinated operation improves usability, particularly for larger vehicles where a single washer wand 804 may not be sufficient to reach all surfaces.

In some embodiments, the wireless communication between windshield washer kiosks 800 may further enable coordinated control of system components including LEDs 854 and digital display devices such that both windshield washer kiosks 800 provide consistent visual indications to the user regarding session status, available washer wands 804, and remaining usage time. Additionally, the windshield washer kiosks 800 may exchange data relating to fluid levels, pump operation, and system status in order to balance usage between the windshield washer kiosks 800 or to prevent overuse of a particular subsystem.

In further embodiments, the windshield washer kiosk 800 may be configured to communicate with a remote server or cloud-based management system via the wireless communication interface. The hardware processor may transmit operational data including usage statistics, transaction data, environmental data, and system performance metrics to the remote server. This communication may facilitate remote monitoring of the windshield washer kiosk 800, including tracking of operational health, identification of faults, and aggregation of usage data across multiple kiosk installations.

In some embodiments, the hardware processor may be configured to perform one or more self-diagnostic routines to evaluate the operational status of system components including pumps, valves, sensors, heater elements, and payment validation systems 806. Diagnostic data may be transmitted to the remote server or to a maintenance interface, allowing operators to identify maintenance needs proactively. The hardware processor may also generate alerts or notifications indicating required maintenance, fault conditions, or component failures. Such alerts may be communicated locally via the digital display device or remotely via the wireless communication interface to a centralized management system or maintenance personnel.

Accordingly, the wireless communication capabilities of the windshield washer kiosk 800 enable coordinated multi- windshield washer kiosk 800 operation, centralized monitoring, and proactive maintenance, thereby enhancing system functionality, user convenience, and overall operational reliability.

In an embodiment, the windshield washer kiosk 800 may also comprise a towel dispensing housing 818. The towel dispensing housing 818 may be a portion of the housing 802 of the windshield washer kiosk 800 used to hold and provide dispensing of the paper towels to the user. In an embodiment, in order to replenish the stock of towels within the towel dispensing housing 818, the towel dispensing housing 818 may include a towel housing door 856. By unlocking the towel housing door 856, a person responsible for maintaining the windshield washer kiosk 800 may access a hollow portion within the windshield washer kiosk 800 that holds a stack or a number of paper towels for dispensing below the towel housing door 856. This towel housing door 856 may be lockable so that anyone who does not have a key to the lock cannot gain access to the entire stock of the paper towels within the towel dispensing housing 818.

The housing 802 of the windshield washer kiosk 800 may also have a fluid reservoir housing 864 portion. The fluid reservoir housing 864 may house a fluid reservoir (not shown) that holds detergent, water, or a detergent and water mixture that is dispensable via the washer wands 804 as described herein. Similar to the towel dispensing housing 818, the fluid reservoir housing 864 may include a reservoir housing door 858. In an embodiment, the reservoir housing door 858 may include a locking mechanism so that no one except a person (e.g., maintenance personnel) who has the key to the lock may access the fluid reservoir. In an embodiment, a fluid filter may be placed behind the reservoir housing door 858. This fluid filter may prevent contaminants from being introduced into the fluid reservoir housed within the fluid reservoir housing 864.

In an embodiment, the windshield washer kiosk 800 may also include a drain pan housing 862. In the embodiment shown in Fig. 8, the drain pan housing 862 may form an upper-most part of the housing 802 of the windshield washer kiosk 800. The drain pan housing 862 may include a shelf that is formed to fit the brush portion 808 and squeegee portion of the washer wand 804. After use, the end of the washer wand 804 that comprises the brush portion 808 and squeegee portion may have excess liquid on it. Indeed, the brush portion 808 in particular may have retained a significant amount of water and detergent mixture thereon such that it may drip onto surfaces of the housing 802 of the windshield washer kiosk 800 if not properly drained. Thus, when the washer wands 804 are affixed to the washer wand mounts 860, the end of the washer wand 804 may be placed on this shelf of the drain pan housing 862 to catch this excess liquid. In an embodiment, the drain pan housing 862 may include an interior drain that is operatively coupled to one or more drain hoses (not show in Fig. 8). These drain hoses may be formed within the housing 802 of the windshield washer kiosk 800 and may direct this excess water down and out of a drain spigot of the windshield washer kiosk 800 formed at or near a bottom portion of the windshield washer kiosk 800. Thus, the drain pan housing 862 operates to house the brush portion 808 and squeegee portion when the washer wand 804 is not in use thereby preventing contaminants from contacting these instruments while also collecting excess liquid and routing that excess liquid out and away from the windshield washer kiosk 800.

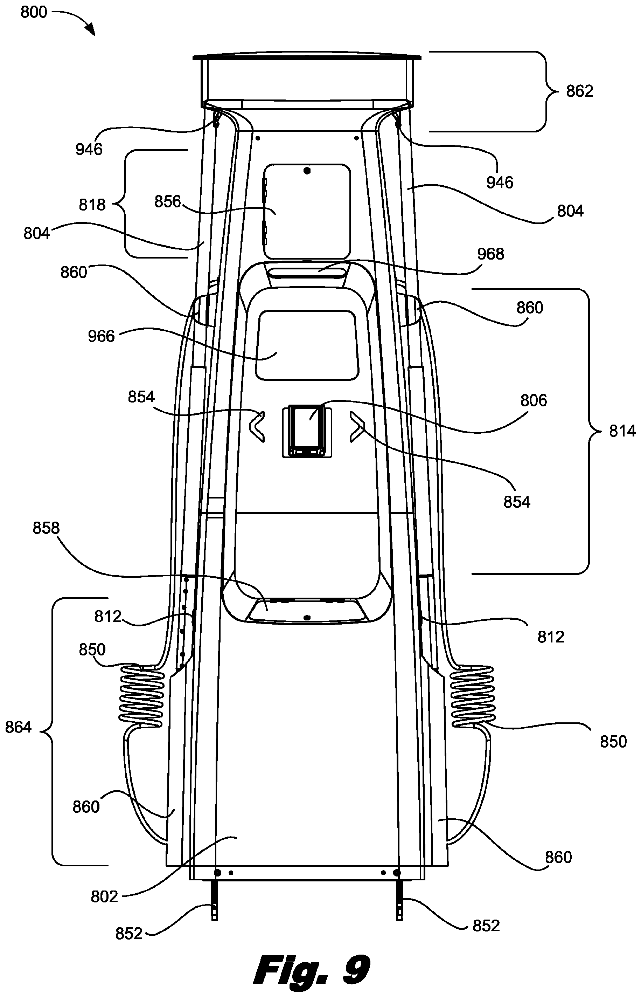

Figs. 9 through 12 show the windshield washer kiosk 800 from various other views different from that of Fig. 8. Turning now to Fig. 9, Fig. 9 is a front view of the windshield washer kiosk of Fig. 8 according to another embodiment of the principles described herein. It is appreciated that some of the elements described in connection with Fig. 8 are also shown and may also be described in connection with Fig. 9.

As shown in Fig. 9, the windshield washer kiosk 800 includes the housing 802, which supports and encloses the internal components of the systems described herein. The housing 802 may be configured to support one or more washer wands 804, each washer wand 804 including a brush portion (not shown), a squeegee portion (not shown), a wand trigger 812, and, in some embodiments, a wand telescoping section 814, as previously described. The washer wands 804 may be fluidically coupled to internal components such as a fluid reservoir (not shown) of the windshield washer kiosk 800 via one or more washer wand supply hoses 850.

The windshield washer kiosk 800 further includes the payment validation system 806 positioned on an exterior portion of the housing 802 and accessible to a user. The payment validation system 806 may, in an example embodiment, include one or more input/output devices for receiving payment and providing user feedback, as described herein. Alternatively, the payment validation system 806 may include a wireless network system that receives payment confirmation from a smartphone application or other off-site software application being executed by a hardware processor and initiates operation of the windshield washer kiosk 800 as described herein.

Fig. 9 further illustrates a digital display device 966 operatively coupled to the payment validation system 806 or a hardware processor within the windshield washer kiosk 800. The digital display device 966 may be configured to present information to the user including, but not limited to, payment status, usage time remaining, selected cleaning modes, system instructions, error messages, or maintenance notifications. In some embodiments, the digital display device 966 may include a touch-sensitive interface allowing user interaction. In some embodiments, the digital display device 966 may also provide indications to the user regarding the selected cleaning modes such as available cleaning features of the windshield washer kiosk 800 and detergents used among other features.

Also shown in Fig. 9 is a sprayer portion 946 associated with at least one of the washer wands 804. The sprayer portion 946 may be positioned at or near a terminal end of the washer wand 804 and may be fluidically coupled to a water mixing manifold (not shown), a fluid pump (not shown) and the fluid reservoir (not shown). The sprayer portion 946 may be configured to discharge a fluid, including a water and detergent mixture or a pre-mixed cleaning solution, onto a surface of a vehicle. In some embodiments, the sprayer portion 946 may be configured to provide one or more spray patterns, flow rates, or pressures that may be made selectable via the user interface presented to the user on the digital display device 966.

The windshield washer kiosk 800 further includes a towel dispensing housing 818 having a towel dispenser opening 968 formed on an surface of the housing 802 underneath the towel dispensing housing 818. The towel dispenser opening 968 may allow a user to access towels stored within the towel dispensing housing 818. In some embodiments, the dispensing of towels through the towel dispenser opening 968 may be controlled based on user interaction with the payment validation system 806 or via one or more sensors, as described herein.

As further shown in Fig. 9, the windshield washer kiosk 800 may include a water supply connection (not shown in Fig. 9), a power source interface (not show in Fig. 9), and a plurality of internal fluid handling components including one or more detergent reservoirs, a water mixing manifold, and one or more pumps, each of which may be housed within the fluid reservoir housing 864. Access to internal components of the windshield washer kiosk 800 may be provided via one or more access points including the reservoir housing door 858 and the towel housing door 856 among other openings described herein.

The housing 802 may further support one or more washer wand mounts 860 configured to retain the washer wands 804 when not in use, as well as a drain pan housing 862 configured to receive and direct excess fluid from the washer wands 804. One or more LEDs 854 may also be provided on the housing 802 to illuminate portions of the windshield washer kiosk 800 and/or provide visual indicators to a user that may indicate availability of use of the washer wands 804 and payment confirmation.

As described herein, the windshield washer kiosk 800 may be secured to a support surface via mounting bolts 852. In an embodiment, the mounting bolts 852 may be formed into a concrete slab formed on sight such that the mounting bolts 852 are preconfigured to interface with a portion of the housing 802 of the windshield washer kiosk 800 when the windshield washer kiosk 800 is installed on site. Alternatively, one or more nuts may be installed into the concrete slab with the mounting bolts 852 being used to interface with those nuts when the windshield washer kiosk 800 is installed on site.

It is appreciated that Fig. 9 provides a front-facing view that further illustrates the relative placement and accessibility of user interface components, fluid delivery components, and service access points of the windshield washer kiosk 800. Thus, any of the features described in connection with Fig. 8 may be similarly incorporated into the embodiment shown in Fig. 9.

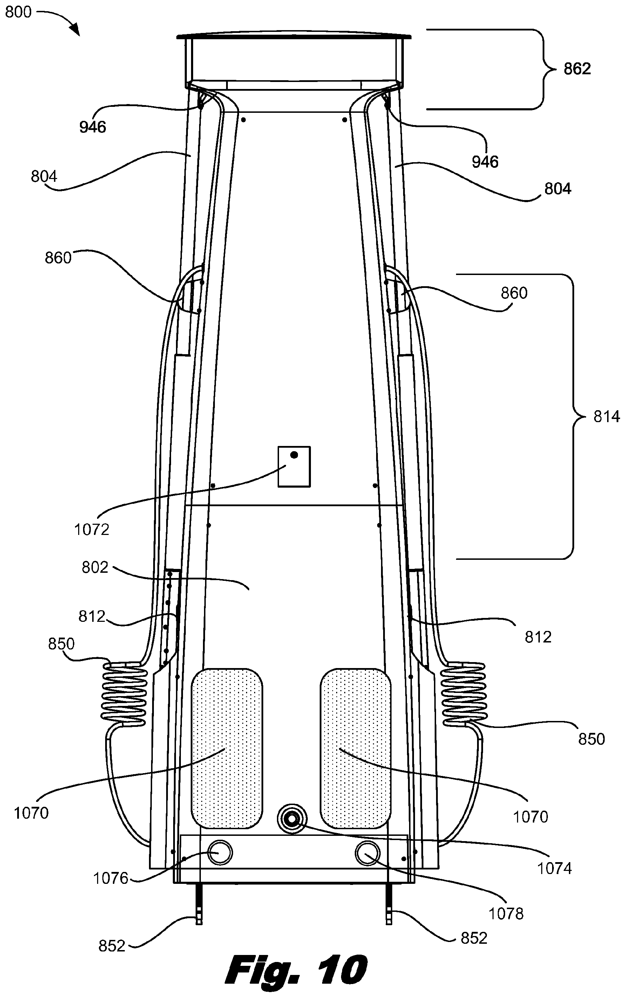

Turning now to Fig. 10, Fig. 10 is a back view of the windshield washer kiosk 800 of Fig. 8 according to another embodiment of the principles described herein. Fig. 10 illustrates additional structural and service-related features of the windshield washer kiosk 800 that may not be fully visible in the perspective view of Fig. 8 or the front view of Fig. 9, while also depicting a number of the elements previously described in connection with those figures.

As shown in Fig. 10, the windshield washer kiosk 800 includes the housing 802, which encloses and supports internal mechanical and electrical components of the system. It is appreciated that Fig. 10 now shows a back portion of the housing 802 opposite the housing 802 shown in Fig. 9. The housing 802 may support one or more washer wands 804, each washer wand 804 including a wand trigger 812 and, in some embodiments, a wand telescoping section 814, as previously described herein. The washer wands 804 may be retained in corresponding washer wand mounts 860 when not in use. Additionally, each washer wand 804 may include a sprayer portion 946 positioned at or near a terminal end thereof for dispensing a water, detergent, or other cleaning fluid onto a surface of the vehicle when the user is using one of the washer wands 804.

Fig. 10 further illustrates a brush scrubber 1070 that may be formed on or coupled to a rear portion of the housing 802. The brush scrubber 1070 may provide a fixed or semi-rigid scrubbing surface that allows a user to clean portions of a washer wand 804, including the brush portion and sprayer portion 946 or other terminal end components, after use. In some embodiments, the brush scrubber 1070 may be configured to remove debris, residue, or excess fluid from the washer wand 804 prior to placement of the washer wand 804 in the washer wand mounts 860 or within the drain pan housing 862. In other embodiments and because the brush portion of the washer wands 804 may accumulate debris and residue after cleaning the surfaces of the vehicle has been conducted by the user, the brush scrubber 1070 may be used by the user to dislodge this debris from the brush portion. The user may do this by scrubbing the brush portion of the washer wands 804 against the brush scrubber 1070 periodically. Because the brush scrubber 1070 includes a spiked or roughed surface, the spikes or roughed surface may help to dislodge any debris from brush portion.

Also shown in Fig. 10 is a drain pan housing 862, which may be configured to collect excess fluid from the washer wands 804. The drain pan housing 862 may be operatively coupled to an excess water drain spigot 1074 via one or more internal drain hoses (not shown in Fig. 10 but described in connection with other figures herein). The excess water drain spigot 1074 may be positioned on a rear or lower portion of the housing 802 and may be configured to direct collected fluid away from the windshield washer kiosk 800, such as to a drainage system or designated runoff area.

Fig. 10 further illustrates a PCB compartment door 1072 formed in the housing 802. The PCB compartment door 1072 may be selectively opened to provide access to a printed circuit board (PCB) (not shown in Fig. 10) housed within the windshield washer kiosk 800. The PCB may include a hardware processor and associated circuitry configured to control operation of one or more system components, including but not limited to pumps (not shown in Fig. 10), the digital display device, the payment validation system, and other electrical or electromechanical elements described herein. In some embodiments, the PCB may further include or be operatively coupled to a power management unit (PMU) configured to regulate and distribute electrical power to the various components of the windshield washer kiosk 800.

As further shown in Fig. 10, the windshield washer kiosk 800 may include an electrical supply conduit 1076 that provides electrical power to the system. The electrical supply conduit 1076 may be operatively and electrically coupled to the PCB and associated components, including the PMU and pumps, to facilitate delivery and regulation of electrical power within the windshield washer kiosk 800. In some embodiments, the electrical supply conduit 1076 may be configured to interface with an external power source such as a utility power line or other electrical infrastructure at a fueling station or installation site. Alternatively, the electrical supply conduit 1076 may include a male or female electrical plug which a user may operatively coupled an extension cord or other electrical cord to the windshield washer kiosk 800 in order to supply power to the windshield washer kiosk 800.

Additionally, the windshield washer kiosk 800 may be secured to a support surface via mounting bolts 852, as previously described. The arrangement of the elements shown in Fig. 10 provides a rear-accessible configuration that facilitates maintenance, servicing of electrical components, fluid drainage, and cleaning of the washer wands 804.

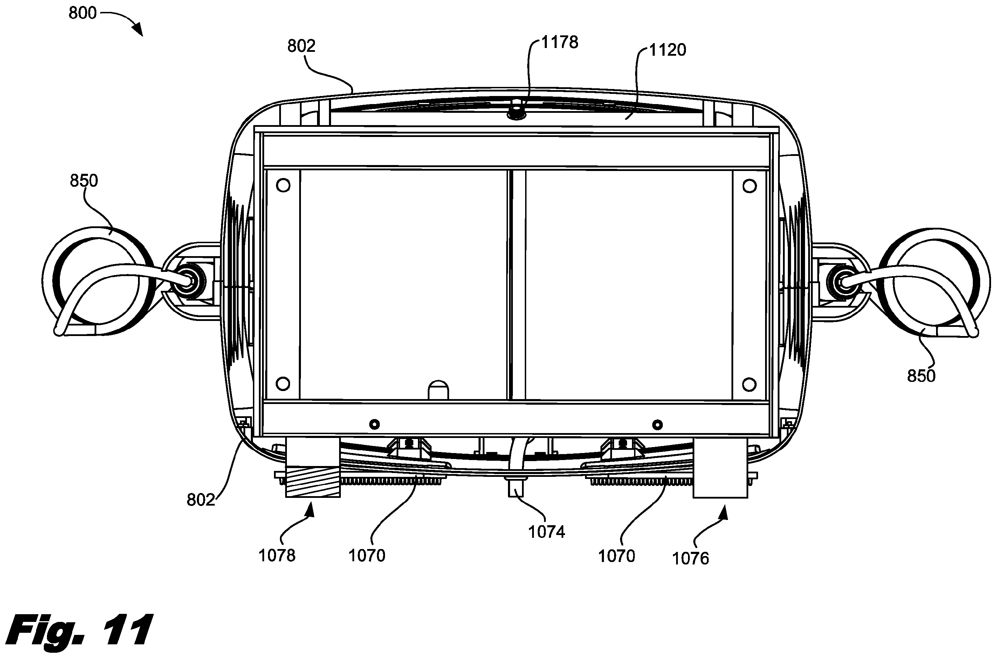

Fig. 10 further illustrates a water supply fitting 1078 positioned on a rear portion of the housing 802. The water supply fitting 1078 may be configured to fluidically couple the windshield washer kiosk 800 to an external water source for supplying water to internal fluid handling components, including the fluid reservoir (e.g., Fig. 11, 1120) and/or the water mixing manifold described herein. In some embodiments, the water supply fitting 1078 may include one or more standardized or configurable connection interfaces to accommodate different installation environments. For example, the water supply fitting 1078 may include a threaded fitting, quick-connect coupling, hose barb, compression fitting, cam-lock fitting, or other releasable fluid coupling mechanism. In certain embodiments, the water supply fitting 1078 may further include an integrated shutoff valve, backflow preventer, pressure regulator, or filtration component to control or condition the incoming water supply. The water supply fitting 1078 may thereby facilitate connection to municipal water lines, on-site plumbing systems, or auxiliary water sources, while allowing flexibility in installation and maintenance of the windshield washer kiosk 800.

It is appreciated that Fig. 10 illustrates features associated with system maintenance, electrical control, and fluid management, and that any of the features described in connection with Figs. 8 and 9 may be similarly incorporated into the embodiment shown in Fig. 10.

Fig. 11 is a bottom view of the windshield washer kiosk 800 of Fig. 8 according to another embodiment of the principles described herein. Fig. 11 illustrates additional structural and fluid management features of the windshield washer kiosk 800 that may not be fully visible in the perspective view of Fig. 8 or the views of Figs. 9 and 10, while also depicting a number of the elements previously described in connection with those figures.

As shown in Fig. 11, the windshield washer kiosk 800 includes the housing 802, which defines a lower portion configured to support and enclose internal fluid handling components. The bottom view further illustrates a fluid reservoir 1120 positioned within or supported by the housing 802. The fluid reservoir 1120 may be configured to store water, a detergent, or a mixture thereof, and may be fluidically coupled to other components of the windshield washer kiosk 800, including the pump and water mixing manifold described herein, for delivery of fluid to one or more washer wands. In a specific embodiment, the fluid reservoir 1120 may store a concentrated detergent that is to be mixed with water received at the water supply fitting 1078 using, in an example embodiment, a water mixing manifold (e.g., Fig. 3, 322) to mix the water and the concentrated detergent. In an embodiment, the water mixing manifold 822 may include a passive mixing assembly that utilizes pressurized water supplied via the water supply fitting 1078 to induce mixing with a concentrated detergent stored within the fluid reservoir (e.g., Fig. 11, 1120). In this example embodiment, the water mixing manifold 822 may include a water supply hose fluidically coupled to the water supply fitting 1078 and a detergent supply hose fluidically coupled to the fluid reservoir 1120. The water supply hose and detergent supply hose may intersect or otherwise be fluidically coupled at a junction configured to create a localized pressure differential within the flowing water. As pressurized water flows through the water supply hose, the velocity of the water may increase at the junction, resulting in a reduction in static pressure that draws an amount of detergent from the fluid reservoir 1120 through the detergent supply hose and into the water stream. This phenomenon may be facilitated by a venturi or aspirator configuration formed by the geometry of the hoses and the coupling interface. In this manner, the relative dimensions, flow characteristics, and positioning of the water supply hose and detergent supply hose may be selected such that a metered amount of detergent is entrained into the water flow without necessarily requiring a dedicated detergent pump.

In some embodiments, the external water source coupled to the water supply fitting 1078 may include a frost-protected standpipe or hydrant assembly having a below-grade shutoff valve positioned beneath a frost line. Such an assembly may include a vertically oriented riser fluidically coupled to a pressurized water supply line, with a valve mechanism disposed at a lower portion of the riser below the frost line and a drain or bleed port positioned proximate the valve mechanism. In an embodiment, the valve mechanism may be operatively coupled to an actuator positioned above ground, such that actuation of the actuator selectively opens the valve to permit pressurized water to flow upward through the riser while simultaneously closing the bleed port. Deactivation of the actuator may close the valve and open the bleed port to permit residual water within the riser to drain from the riser. In this manner, the frost-protected standpipe or hydrant assembly may define a freeze-resistant upstream supply interface for the windshield washer kiosk 800, whereby the portion of the water supply exposed to ambient conditions is substantially emptied of standing water when not in use. The water supply fitting 1078 may be fluidically coupled to an outlet of the standpipe or hydrant assembly via a hose, conduit, or rigid piping, thereby enabling delivery of pressurized water to the windshield washer kiosk 800 when the valve mechanism is in an open state.

In some embodiments, the actuator associated with the below-grade valve may be configured for manual operation, such that an operator selectively opens and closes the valve to enable or disable water flow to the windshield washer kiosk 800. In other embodiments, the actuator may be operatively coupled to an automated control system executed by the hardware processor of the windshield washer kiosk 800, that may be operatively coupled to an electromechanical actuator, motorized valve interface, or solenoid-driven linkage, thereby enabling the below-grade valve to be selectively actuated in response to a user input, payment event, or activation of one or more washer wands 804. For example, in response to receipt of payment or actuation of a wand trigger 812 on a washer wand 804, the control system may cause the below-grade valve to transition to an open configuration, thereby permitting pressurized water to flow to the water supply fitting 1078 and associated internal fluid handling components. Upon completion of a dispensing cycle or after a predetermined period of inactivity, for example, the control system executed by the hardware processor may cause the below-grade valve to close, thereby terminating the supply of pressurized water and permitting drainage of residual water from the riser via the bleed port.

In some embodiments, the bleed port associated with the below-grade valve may be configured to discharge residual water into a surrounding subsurface drainage region, such as a gravel bed or other permeable medium. In other embodiments, particularly where environmental or regulatory considerations are present, the bleed port may be fluidically coupled to a dedicated drainage conduit, collection basin, or wastewater handling system formed below the frost line, thereby enabling controlled capture and disposal of discharged fluid. In such embodiments, the drainage conduit may be configured to prevent backflow or ingress of contaminants into the riser or water supply.

In further embodiments, the automated control system may include one or more additional flow control and conditioning components positioned downstream of the frost-protected standpipe or hydrant assembly and upstream of, or integrated with, the water supply fitting 1078. Such components may include, but are not limited to, pressure regulators, check valves, backflow preventers, filters, flow meters, and electronically actuated shutoff valves. These components may cooperate with the below-grade valve to provide controlled, intermittent delivery of pressurized water to the windshield washer kiosk 800, while maintaining desired pressure and flow characteristics for operation of the pump, water mixing manifold 822, and washer wands.

In certain implementations, the below-grade valve may be configured to operate in a substantially binary manner between a closed state and an open state, such that fine control of flow rate is achieved downstream of the valve, including via the pump, water mixing manifold 822, or one or more pressurized flow control devices. In this configuration, the frost-protected standpipe or hydrant assembly may primarily function as a freeze-resistant supply isolation device, while downstream components provide metered delivery of water and detergent mixtures to the washer wands.

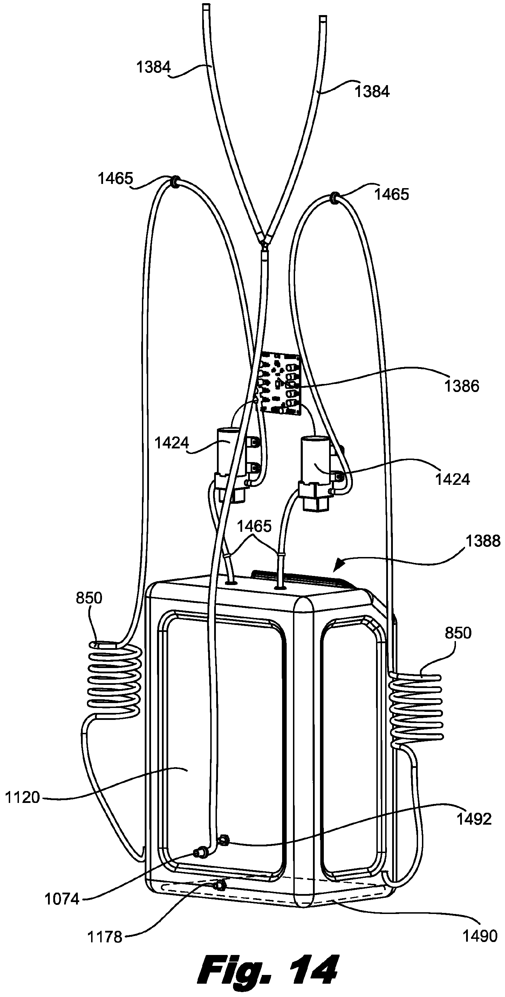

In some embodiments, the windshield washer kiosk 800 may be configured such that water supplied via the frost-protected standpipe or hydrant assembly is directed to the fluid reservoir 1120 for storage, to a water supply hose for direct mixing with a detergent, or to a combined flow path including both storage and direct mixing pathways, as described herein. The control system of the windshield washer kiosk 800 may selectively coordinate operation of the below-grade valve, pump (e.g., 1424, Fig. 14), and any associated mixing or dispensing components to achieve a desired dispensing profile in response to user interaction. In this manner, integration of a frost-protected standpipe or hydrant assembly upstream of the water supply fitting 1078 may provide a robust, freeze-resistant water supply solution for the windshield washer kiosk 800, particularly in environments subject to sub-freezing temperatures, while enabling automated, user-responsive control of water delivery and compatibility with a variety of internal fluid handling configurations.

As described in some embodiments herein, however, the windshield washer kiosk 800 may further include a pump fluidically coupled to the water mixing manifold 822. The pump may be positioned upstream, downstream, or integrated with respect to the mixing manifold 822 and may be configured to selectively drive the flow of the water and detergent mixture through the fluid delivery system and toward the sprayer portion (e.g., Fig. 9, 946) of one or more washer wands. In certain embodiments, the pump may operate in conjunction with the pressurized water supplied via the water supply fitting 1078, while in other embodiments the pump may provide primary flow control independent of external water pressure. The pump may thereby enable controlled dispensing, variable flow rates, and consistent delivery of the mixture to the washer wands during operation. In some embodiments, the water mixing manifold may further include one or more flow restrictors, valves, orifice inserts, or adjustable metering components to regulate the ratio of detergent to water.

The fluid reservoir 1120 may further include a fluid reservoir drainage plug 1180 positioned at or near a bottom portion of the fluid reservoir 1120. The fluid reservoir drainage plug 1178 may be selectively removable or openable to allow for draining of fluid from the fluid reservoir 1120, such as during maintenance, cleaning, winterization, or replacement of fluids. In some embodiments, the fluid reservoir drainage plug 1180 may include a threaded interface, valve mechanism, or sealing member to facilitate controlled drainage while preventing unintended leakage during operation or while the windshield washer kiosk 800 is not being operated by a user.

Also shown in Fig. 11 is the excess water drain spigot 1074, which may be positioned to extend from the housing 802 and provide an outlet for fluid collected within the drain pan housing (e.g., Fig. 8, 862). As described in connection with Fig. 10, the excess water drain spigot 1074 may be fluidically coupled to one or more internal drain hoses that direct collected fluid from the drain pan housing to the exterior of the windshield washer kiosk 800.

Fig. 11 further illustrates at least a portion of the washer wand supply hose 850 extending from the housing 802. The washer wand supply hose 850 may be configured to fluidically couple internal fluid delivery components, including the fluid reservoir 1120, pump, and mixing manifold, to one or more washer wands. The routing and positioning of the washer wand supply hose 850 as shown in the bottom view may facilitate extension of the washer wands away from the housing 802 during use while maintaining fluid communication with internal components.

Additionally, Fig. 11 also depicts a portion of the brush scrubber 1070 extending from or formed on the housing 802. As described in connection with Fig. 10, the brush scrubber 1070 may provide a surface for cleaning or conditioning portions of the washer wand. The position of the brush scrubber 1070 relative to the lower portion of the housing 802 may facilitate drainage of any fluid and debris away from the windshield washer kiosk 800.

It is appreciated that Fig. 11 provides a bottom-facing view that further illustrates fluid storage, drainage, and routing features of the windshield washer kiosk 800, and that any of the features described in connection with Figs. 8 through 10 may be similarly incorporated into the embodiment shown in Fig. 11.

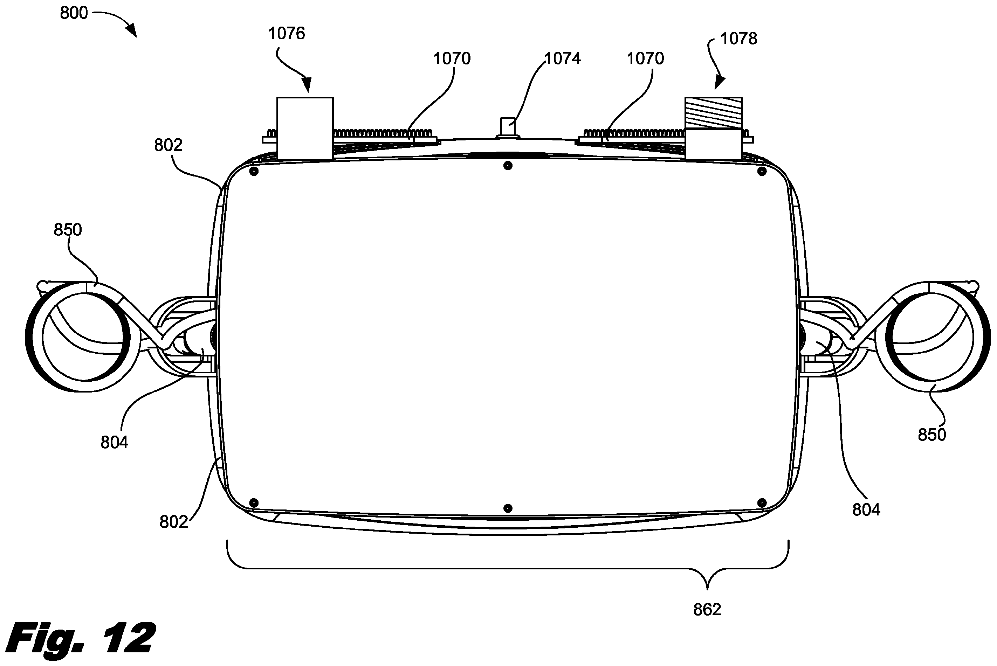

Fig. 12 is a top view of the windshield washer kiosk 800 of Fig. 8 according to another embodiment of the principles described herein. Fig. 12 illustrates additional structural and fluid management features of the windshield washer kiosk 800 that may not be fully visible in the views of Figs. 8-11, while also depicting a number of the elements previously described in connection with those figures.

As shown in Fig. 12, the windshield washer kiosk 800 includes the housing 802, which defines an upper portion configured to support user-accessible components and facilitate storage of one or more washer wands 804 when not in use. In particular, the housing 802 may include one or more recessed portions, apertures, or retention features formed along opposing sides or upper surfaces thereof. These recessed portions or retention features may be configured to receive and support a head portion of each washer wand 804, including the brush portion and squeegee portion, such that the washer wand 804 may be securely positioned when not in use. In some embodiments, the washer wand 804 may rest on a support surface or shelf within the recessed portion while a portion of the washer wand extends into an opening formed in the housing 802, thereby maintaining the washer wand in a stable and accessible position.

The positioning of the head of the washer wand 804 within the recessed portion of the housing 802 may be configured such that residual fluid from the washer wand, including water and detergent, is directed within the drain pan housing 862 towards a drain formed therein. As shown in Fig. 12, the drain pan housing 862 may be prominently positioned along an upper region of the housing 802 and may include one or more openings, perforations, or drainage apertures configured to receive fluid dripping from the washer wand 804 while it is in a stored position.

Additionally, the drain pan housing 862 may be fluidically coupled to one or more internal drainage pathways, including drain hoses (as described in connection with other figures herein), which direct collected fluid toward the excess water drain spigot 1074. In this manner, excess fluid may be conveyed away from the windshield washer kiosk 800, thereby reducing accumulation of liquid on or around the housing 802 and maintaining a cleaner operating environment.

Fig. 12 may further illustrate portions of the washer wand supply hose 850 extending from the housing 802 to the washer wands 804, allowing fluid communication between internal fluid handling components and the washer wands during operation. Additionally, components such as the electrical supply conduit 1076, the water supply fitting 1078, and the brush scrubber 1070 may be partially visible or extend into the top view depending on configuration, and may be arranged relative to the housing 802 to facilitate system operation, maintenance access, and user interaction.

Again, it is appreciated that Fig. 12 provides a top-facing view that further illustrates the interaction between washer wand storage, fluid drainage, and housing configuration, and that any of the features described in connection with Figs. 8-11 may be similarly incorporated into the embodiment shown in Fig. 12.

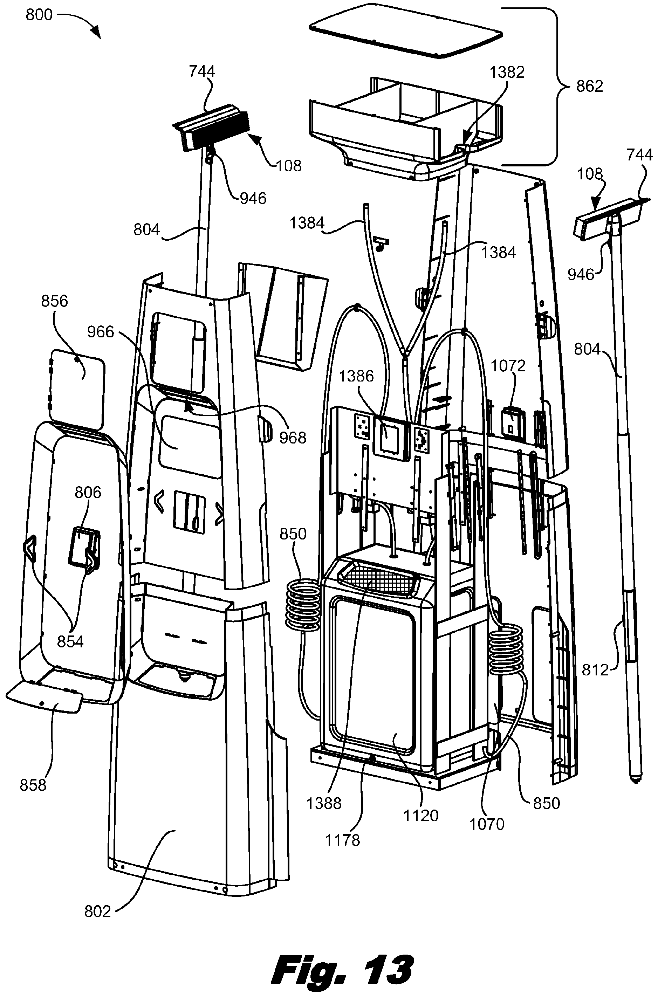

Fig 13 is a perspective, exploded view of the windshield washer kiosk 800 showing various internal elements within the windshield washer kiosk 800 according to an embodiment of the principles described herein. Fig. 13 illustrates internal structural, fluid handling, electrical, and user interface components of the windshield washer kiosk 800 in a separated configuration to more clearly depict the relationships between such components, while also depicting a number of the elements previously described in connection with Figs. 8-12.

As shown in Fig. 13, the windshield washer kiosk 800 includes the housing 802, which may be formed from multiple panels or structural members that enclose and support internal subsystems. The exploded view of Fig. 13 illustrates how various components may be mounted within or coupled to the housing 802, including fluid delivery components, drainage components, electrical control components, and user interface components. In some embodiments, access to internal components may be provided via one or more access panels or doors, including the towel housing door 856 and the reservoir housing door 858 as described herein.

The windshield washer kiosk 800 may include one or more washer wands 804 fluidically coupled to internal fluid delivery components via washer wand supply hoses 850. Each washer wand 804 may include a sprayer portion 946 and a wand trigger 812 configured to selectively dispense fluid. The washer wands 804, when not in use, may be supported externally by the housing 802 and may be operatively coupled to internal subsystems that provide fluid flow, as described herein. A payment validation system 806 and a digital display device 966 may be coupled to the housing 802 to facilitate user interaction, including payment processing and presentation of operational information. In some embodiments, a towel dispenser opening 968 may be formed in the housing 802 to provide access to towels stored within the windshield washer kiosk 800. One or more LEDs 854 may be positioned on or within the housing 802 to provide illumination or status indication. It is appreciated that, because the windshield washer kiosk 800 involves the use of fluids including water and detergent, some interfaces between the electrical supply conduit (not shown), the payment validation system 806, the digital display device 966, the pumps (not shown), as well as other electrical components such as a wireless network adapter may include various types of gaskets and coverings in order to waterproof these systems. For example, the payment validation system 806 and digital display device 966 may include a waterproof gasket that would prevent vapor, water, and detergent from contacting these electrical devices and damaging them.

The exploded view of Fig. 13 further illustrates a drainage subsystem associated with the drain pan housing 862. In particular, the drain pan housing 862 may include one or more drain pan drains 1382 formed therein. Each drain pan drain 1382 may be positioned at a lower portion of the drain pan housing 862 and configured to receive excess fluid from a dripping washer wand 804 which is collected within the drain pan housing 862 from the washer wands 804.

Each drain pan drain 1382 may be fluidically coupled to a corresponding drain pan drain hose 1384. The drain pan drain hoses 1384 may extend within the interior of the housing 802 and may be routed such that fluid collected from one or more drain pan drains 1382 is conveyed away from the drain pan housing 862. In some embodiments, multiple drain pan drain hoses 1384 may be combined or merged within the housing 802 to form a common drainage pathway. The combined drainage flow may then be directed toward an outlet such as the excess water drain spigot (e.g., Fig. 10, 1074), which may be positioned at or near a lower portion of the windshield washer kiosk 800. This configuration may facilitate efficient removal of excess water and detergent from the system while reducing fluid accumulation within the housing 802.

Fig. 13 further illustrates the fluid reservoir 1120 positioned within the housing 802. The fluid reservoir 1120 may be configured to store water, detergent, or a mixture thereof, and may be fluidically coupled to the fluid delivery system that supplies fluid to the washer wands 804. As described in one example embodiment, the fluid reservoir 1120 may maintain only a detergent such that, by pumping the detergent to the washer wands 804, an amount of water is mixed with the detergent. The fluid reservoir 1120 may be accessible via the reservoir housing door 858 to allow for refilling, maintenance, or replacement. It is appreciated that, although Fig. 13 shows a single fluid reservoir 1120, the present specification contemplates that multiple fluid reservoirs 1120 may be formed in the housing 802 so that different types of detergents, for example, may be used by the user. In this example embodiment, a selection circuit formed on the PCB 1386 that is operatively coupled to the hardware processor may selectively control which of the plurality of fluid reservoirs supplies cleaning fluid to the fluid delivery system based on user-selections at, for example, the digital display device 966. It is further appreciated that, where multiple fluid reservoirs 1120 are present, the windshield washer kiosk 800 may include multiple pumps (not shown) such that a single pump may be used to pump an appropriate type of detergent out of a single fluid reservoir 1120 according to user-selected instructions at the digital display device 966.

Associated with the fluid reservoir 1120 is a fluid reservoir fluid filter 1388. The fluid reservoir fluid filter 1388 may be positioned within or upstream of the fluid reservoir 1120 and configured to filter particulate matter, debris, or contaminants from the fluid being introduced into the fluid reservoir 1120. In some embodiments, the fluid reservoir fluid filter 1388 may be positioned along a fluid inlet path where a maintenance professional would introduce a detergent into the fluid reservoir 1120 to protect downstream components, including pumps, valves, and sprayer portions 946 of the washer wands 804. The fluid reservoir fluid filter 1388 may be removable or replaceable to facilitate maintenance of fluid quality and system performance. It is appreciated that other filters may be positioned downstream of the fluid reservoir 1120 to further prevent the introduction of contaminants into the fluid path from the fluid reservoir 1120 and to the sprayer portion 946 of the washer wands 804.

In some embodiments, the fluid reservoir 1120 may further include a fluid reservoir drainage plug (e.g., Fig. 11, 1180) to allow selective draining of the reservoir, although such component may not be shown in Fig. 13. The integration of the fluid reservoir 1120 and fluid reservoir fluid filter 1388 within the housing 802 provides a controlled and maintainable fluid supply for the windshield washer kiosk 800.

The exploded view of Fig. 13 further illustrates a printed circuit board (PCB) 1386 positioned within the housing 802 and accessible via the PCB compartment door 1072. The PCB 1386 may include a hardware processor and associated circuitry configured to control operation of various electrical and electromechanical components of the windshield washer kiosk 800. Such components may include, but are not limited to, pumps, the payment validation system 806, the digital display device 108, lighting elements such as LEDs 854, a wireless network adapter, and other system components described herein.

In some embodiments, the PCB 1386 may further include or be operatively coupled to a power management unit configured to regulate electrical power delivered to the various components of the windshield washer kiosk 800. The PCB 1386 may be electrically coupled to an external power source via an electrical supply conduit (e.g., Fig. 10, 1076), thereby enabling coordinated control and operation of the system. The positioning of the PCB 1386 within the housing 802 may be selected to protect the electrical components from environmental exposure while allowing access for maintenance or servicing via the PCB compartment door 1072.

As illustrated in Fig. 13, the various subsystems of the windshield washer kiosk 800, including the fluid delivery subsystem, drainage subsystem, electrical control subsystem, and user interface components, may be integrated within the housing 802 in a manner that supports coordinated operation. Fluid may be stored within the fluid reservoir 1120, filtered via the fluid reservoir fluid filter 1388, and delivered through internal conduits and hoses to the washer wands 804 for dispensing via the sprayer portions 946. Excess fluid may be collected within the drain pan housing 862, directed through the drain pan drains 1382 and drain pan drain hoses 1384, and expelled from the system via the excess water drain spigot.

User interaction with the windshield washer kiosk 800 may be facilitated via the payment validation system 806 and digital display device 966, while access to internal components for maintenance may be provided via the towel housing door 856, reservoir housing door 858, and PCB compartment door 1072. The exploded view of Fig. 13 thereby illustrates the structural and functional relationships between the various components of the windshield washer kiosk 800. It is appreciated that Fig. 13 provides a detailed view of internal component arrangement and subsystem integration, and that any of the features described in connection with Figs. 8-12 may be similarly incorporated into the embodiment shown in Fig. 13.

Fig. 14 is a perspective back view of a fluid reservoir 1120, fluid pumps 1424, and a PCB 1386 used to control, at least, the fluid pumps 1424, the fluid reservoir 1120, fluid pumps 1424, and a formed within the housing of the windshield washer kiosk according to an embodiment of the principles described herein. Fig. 14 illustrates the relative positioning and interaction of fluid storage, fluid movement, and control components from a rear-facing perspective of the fluid reservoir 1120, while also depicting elements previously described in connection with Figs. 8-13.

The fluid reservoir 1120 shown in Fig. 14 may be positioned within the housing 802 and configured to store a fluid, including water, detergent, or a mixture thereof. In this rear-facing view, the fluid reservoir 1120 may include one or more inlet and outlet interfaces that facilitate fluid communication with other components of the system. The fluid reservoir 1120 may be structurally supported within the housing of the windshield washer kiosk (e.g., Fig. 8, 800) and positioned to supply fluid to downstream components, including the fluid pumps 1424 and washer wand supply hoses 850. In some embodiments, the fluid reservoir 1120 may be accessible for maintenance via the reservoir housing door (e.g., Fig. 13, 858).

Fig. 14 further illustrates one or more fluid pumps 1424 fluidically coupled to the fluid reservoir 1120. The fluid pumps 1424 may be configured to draw fluid from the fluid reservoir 1120 and selectively drive the fluid through the fluid delivery system, including toward and through the washer wand supply hoses 850 and ultimately to the sprayer portions of the washer wands. In some embodiments, multiple fluid pumps 1424 may be provided to independently control flow from different fluid sources, regulate flow rates, or provide redundancy. The fluid pumps 1424 may be positioned downstream of the fluid reservoir 1120 and may be operatively controlled by the PCB 1386 to provide controlled dispensing, variable pressure, and consistent delivery of fluid during operation of the windshield washer kiosk 800.

In some embodiments, the fluid pumps 1424 may be configured to perform a post-session operation such as depressurizing fluid lines and initiating fluid evacuation routines. This depressurization and evacuation processes may prevent fluids from being held for long periods of time in the washer wand supply hose 850 while also preventing the fluid from freezing during cold temperatures thereby potentially damaging the washer wand supply hose and other components of the windshield washer kiosk. Thus, in an embodiment, the fluid pumps 1424 may be configured to pump fluids both from the fluid reservoir 1120 and out of the washer wands via the washer wand supply hose 850 and pump fluids in a reverse direction so as to evacuate those fluids from the washer wand supply hose 850.

In another embodiment, the windshield washer kiosk may include a matrix of electronically controlled fluid valves 1465 (solenoid valves) fluidically coupled to one or more fluid delivery channels including the washer wand supply hose, the mixing manifold, and one or more fluid reservoirs. The matrix of electronically controlled fluid valves 1465 may be operatively controlled by the hardware processor to selectively direct fluid flow along a plurality of flow paths within the windshield washer kiosk. In this example embodiment, the fluid pumps 1424 may comprise single-direction pumps configured to move fluid in a single flow direction. The matrix of electronically controlled fluid valves 1465 may be selectively actuated to alter the effective direction of fluid movement within the system without reversing operation of the fluid pump 1424. By selectively opening and closing combinations of the electronically controlled fluid valves 1465, the hardware processor may dynamically reconfigure the fluid circuit to achieve different operational modes. Thus, in an embodiment, a first operational mode may include a normal dispensing mode in which fluid is directed from a fluid reservoir 1120, through a mixing manifold, and to the washer wand for application to a surface of a vehicle. In another embodiment, a second operational mode may include an evacuation mode in which the matrix of electronically controlled fluid valves 1465 is actuated to redirect fluid flow such that fluid within the washer wand, washer wand supply hose 850, and associated fluid delivery channels is evacuated. In this embodiment, the hardware processor may control the electronically controlled fluid valves 1465 to establish a return flow path to the reservoir or another fluid collection pathway such that residual fluid is removed from exposed or freeze-prone portions of the system. Again, as described herein, this evacuation mode may be initiated in response to received environmental data indicating that ambient temperatures are at or below a predetermined temperature threshold such that freezing of the fluids may occur. In yet another embodiment, a third operational mode may include a recirculation mode in which the matrix of electronically controlled fluid valves 1465 directs fluid through a closed-loop flow path extending from the reservoir 1120, through one or more internal fluid channels, and back to the reservoir 1120. In this embodiment, the fluid pumps 1424 circulate fluid continuously or intermittently to distribute thermal energy throughout this fluidic system. Where the fluid has been heated using, for example, the heater pad 1490, such recirculation may maintain elevated temperatures within internal components including the fluid pumps 1424, thereby reducing the likelihood of freezing.

In an embodiment, the hardware processor may selectively transition between the normal dispensing mode, the evacuation mode, and the recirculation mode based on environmental data received from one or more temperature sensors or remote data sources. This configuration allows the windshield washer kiosk to mitigate freezing conditions without requiring reversal of the fluid pumps 1424 or the addition of chemical antifreeze agents, thereby simplifying system design and improving operational reliability.

In some embodiments, a heater pad 1490 may be coupled to, formed within, or positioned adjacent to the fluid reservoir 1120. The heater pad 1490 may be configured to apply heat to the fluid contained within the fluid reservoir 1120 to maintain the fluid above a predetermined temperature threshold. This may be particularly advantageous in cold environments to prevent freezing of the fluid and to improve cleaning performance of the fluid when dispensed. In particular, where debris has formed onto the surface of a vehicle that is to be cleaned, the heated fluids emitted from the sprayer portion of the washer wands may increase the effectiveness of the detergent and brush portion such that the user may more effectively dislodge and wash away the debris. The heater pad 1490 may be electrically coupled to and controlled by the PCB 1386. In this embodiment, the PCB 1386 may regulate operation of the heater pad 1490 based on input from temperature sensors or other system parameters. In some embodiments, the windshield washer kiosk may be operatively coupled to the internet via a wireless network adapter such that up-to-date temperature data at the location where the windshield washer kiosk so that the heater pad 1490 is selectively activated or deactivated based on that temperature data. In some embodiments, the heater pad 1490 may operate in coordination with other fluid management strategies described herein, including recirculation or evacuation of fluid within the windshield washer kiosk.

Fig. 14 further illustrates a reservoir water supply nipple 1492 fluidically coupled to the fluid reservoir 1120. The reservoir water supply nipple 1492 may be configured to receive water from an external water source via the water supply fitting (e.g., Fig. 10, 1078) in an embodiment. In this manner, the reservoir water supply nipple 1492 may provide an inlet through which water may be introduced into the fluid reservoir 1120 for storage, mixing, or subsequent delivery through the system. Thus, the fluid reservoir 1120 of the windshield washer kiosk may be used to hold a concentrated detergent within the fluid reservoir 1120 or a mixture of detergent and water (water supplied via the reservoir water supply nipple 1492) with the later option being used in locations where a constant water supply is not available. In some embodiments, the reservoir water supply nipple 1492 may include a coupling interface compatible with various hose or conduit types and may be configured to cooperate with upstream components such as valves, regulators, or filtration elements associated with the water supply fitting 1078.

As described herein, the PCB 1386 may be positioned adjacent to the fluid reservoir 1120 and fluid pumps 1424 and may be configured to control operation of one or more components of the windshield washer kiosk 800. The PCB 1386 may include a hardware processor and associated circuitry configured to control the fluid pumps 1424, the heater pad 1490, and other electrical components described herein such as the PMU and network interface adapter. In some embodiments, the PCB 1386 may further be configured to receive inputs from sensors, control activation of the washer wands, and coordinate operation with user interface components such as the payment validation system and digital display device. The PCB 1386 may be electrically coupled to a power source via the electrical supply conduit (e.g., Fig. 10, 1076) and may be accessible for maintenance via the PCB compartment door (e.g., Fig. 10, 1072).

Fig. 14 further illustrates a fluid reservoir fluid filter 1388 associated with the fluid reservoir 1120. The fluid reservoir fluid filter 1388 may be positioned below the reservoir housing door and upstream of the fluid reservoir 1120, the fluid pumps 1424, and the washer wand supply hose 850. The fluid reservoir fluid filter 1388 may be used to remove particulates or contaminants from the fluid prior to delivery into the fluid reservoir 1120. The filtered fluid may then be directed through the washer wand supply hoses 850 to the washer wands for dispensing as described herein.

Additionally, Fig. 14 may depict portions of the drainage system, including drain pan drain hoses 1384, which may be routed within the housing to direct collected fluid toward the excess water drain spigot (e.g., Fig. 10, 1074). The presence of the drain pan drain hoses 1384 in this view further illustrates the integration of fluid delivery and drainage systems within the windshield washer kiosk 800. In some embodiments, the fluid reservoir 1120 may further include a fluid reservoir drainage plug (e.g., Fig. 11, 1180), which may allow selective draining of the fluid reservoir 1120 for maintenance or winterization purposes.

As illustrated in Fig. 14, the fluid reservoir 1120, fluid pumps 1424, heater pad 1490, reservoir water supply nipple 1492, and PCB 1386 may cooperate to provide controlled storage, conditioning, and delivery of fluid within the windshield washer kiosk 800. Water may be introduced into the fluid reservoir 1120 via the reservoir water supply nipple 1492 in an embodiment, with the detergent being filtered via the fluid reservoir fluid filter 1388. Any fluid maintained in the fluid reservoir 1120 is heated via the heater pad 1490 when necessary. Additionally the fluid within the fluid reservoir 1120 is pumped via the fluid pumps 1424 through the washer wand supply hoses 850 for dispensing. Excess fluid may be collected and removed via the drainage system including the drain pan drain hoses 1384 and excess water drain spigot 1074. It is appreciated that Fig. 14 provides a detailed view of the interaction between fluid storage, fluid movement, heating, and control systems within the windshield washer kiosk 800, and that any of the features described in connection with Figs. 8 through 13 may be similarly incorporated into the embodiment shown in Fig. 14.

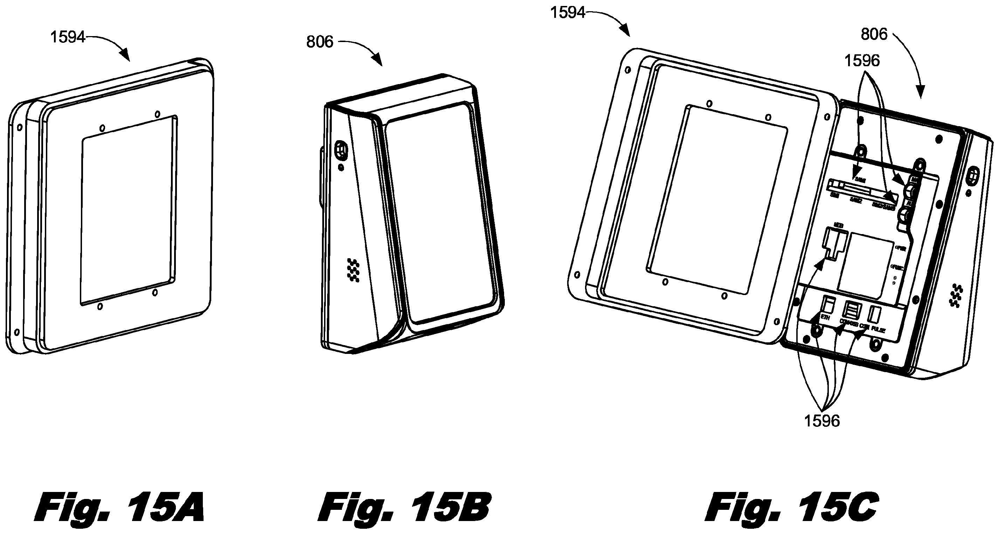

Fig. 15A is a front perspective view of a mounting bracket 1594 for a payment validation system according to an embodiment of the principles described herein. Additionally, Fig. 15B is a front perspective view of a payment validation system 806 according to an embodiment of the principles described herein. Still further Fig. 15C is a front perspective view of the mounting bracket 1594 and a back perspective view of the payment validation system 806 of Figs. 15B and 15C with the mounting bracket 1594 operatively coupled to the payment validation system 806 via a hinge according to an embodiment of the principles described herein.

As shown in Fig. 15A, the mounting bracket 1594 may be configured to support and secure the payment validation system 806 to the housing of the windshield washer kiosk. The mounting bracket 1594 may include one or more structural members, flanges, or mounting interfaces configured to be coupled to the housing (e.g., Fig. 8, 802). In some embodiments, the mounting bracket 1594 may be formed from a rigid material such as metal or reinforced polymer to provide structural support and resistance to environmental exposure. The mounting bracket 1594 may further include a hinge interface configured to allow pivotable coupling of the payment validation system 806, as described in connection with Fig. 15C. In an embodiment, the mounting bracket 1594 may include a gasket that prevents water from entering into the housing of the payment validation system 806.

As shown in Fig. 15B, the payment validation system 806 may include a front-facing interface accessible to a user for initiating and completing payment transactions. The payment validation system 806 may include one or more input/output devices, including but not limited to card readers, contactless payment interfaces, keypads, touchscreens, or display elements, configured to receive payment information and provide feedback to the user. In some embodiments, the payment validation system 806 may be operatively coupled to a digital display device (e.g., Fig. 9, 966) or may itself incorporate display functionality.

Fig. 15C illustrates the payment validation system 806 coupled to the mounting bracket 1594 via a hinge mechanism. The hinge may allow the payment validation system 806 to pivot relative to the mounting bracket 1594 to provide access to a rear portion of the payment validation system 806 for installation, maintenance, or servicing. In some embodiments, the hinge mechanism may include a locking feature to secure the payment validation system 806 in a closed position during operation while allowing selective opening when access is required.

The rear portion of the payment validation system 806, as shown in Fig. 15C, may include a plurality of communication and power interfaces 1596. These interfaces may include one or more network communication ports (e.g., Ethernet), serial or universal serial bus (USB) communication ports, and one or more power input ports configured to receive electrical power. In some embodiments, the payment validation system 806 may further include interfaces configured to communicate with peripheral devices such as coin acceptors, pulse-based input systems, or other transaction-related hardware. For example, one or more ports may be configured to receive signals from coin mechanisms or pulse-generating devices associated with legacy or alternative payment systems.

In some embodiments, the payment validation system 806 may further include a multi-drop bus (MDB) interface configured to communicate with vending-type peripherals, as well as one or more configurable input/output interfaces for integration with external control systems. The payment validation system 806 may also include one or more secure access module (SAM) interfaces configured to receive security modules used for encryption, authentication, or secure transaction processing. Additionally, one or more subscriber identity module (SIM) interfaces may be provided to enable wireless communication via cellular networks.

The rear portion of the payment validation system 806 may further include one or more primary and auxiliary connection ports (e.g., "Main" and "Aux") configured to interface with wiring harnesses or communication lines within the windshield washer kiosk 800. These connection ports may facilitate transmission of power and data signals between the payment validation system 806 and other components of the system such as the digital display device.

In operation, the payment validation system 806 may be operatively coupled to a printed circuit board (e.g., Fig. 14, 1386), which may include a hardware processor and a PMU. The payment validation system 806 may transmit signals indicative of a completed or authorized payment to the hardware processor via one or more of the communication interfaces described herein. In response to receiving such signals, the hardware processor may initiate operation of one or more system components, including illuminating one or more LEDs and enabling operation of fluid delivery components such as the fluid pumps.

In some embodiments, operation of the fluid pumps may be further conditioned on user interaction with a washer wand (e.g., Fig. 8, 804), such as actuation of a wand trigger (e.g., Fig. 8, 812). The wand trigger may generate an electrical signal or may cause a detectable change in system conditions, such as fluid pressure or flow, which may be sensed by the system and communicated to the hardware processor. Upon detecting such user input following payment authorization, the hardware processor may cause one or more pumps to activate, thereby delivering fluid through the washer wand for cleaning operations.

Again, it is appreciated that Figs. 15A-15C illustrate a modular and serviceable configuration of the payment validation system 806 and its mounting arrangement, as well as the integration of payment processing, communication interfaces, and system control within the windshield washer kiosk. Any of the features described in connection with Figs. 8-14 may be similarly incorporated into the embodiments shown in Figs. 15A-15C.

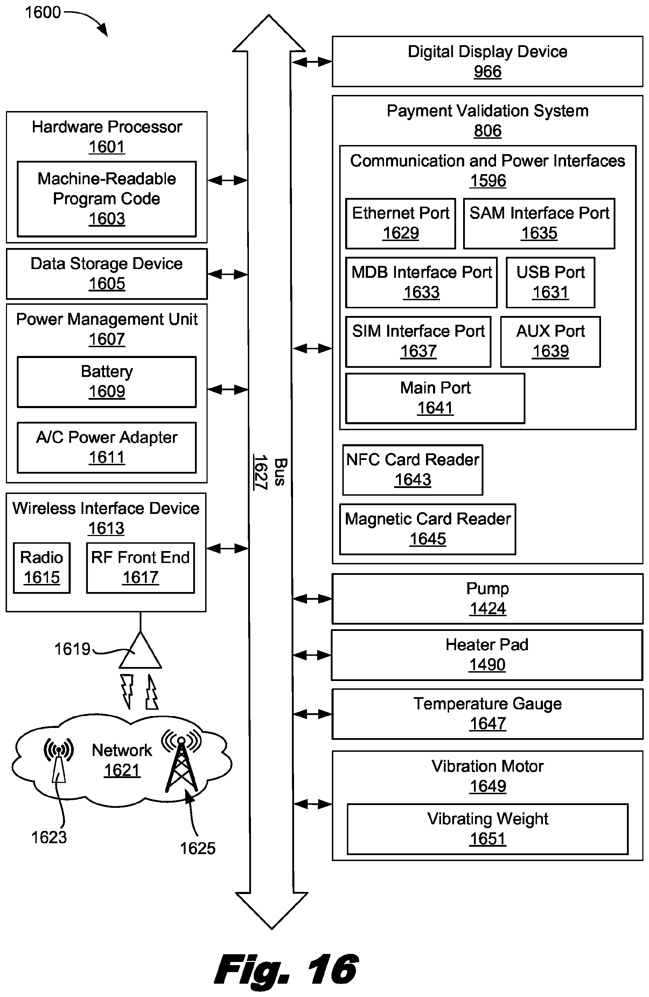

Fig. 16 is a block diagram of a windshield washer kiosk payment system 1600 including a payment interface of the washer kiosk (e.g., FIG. 8, 800) according to an embodiment of the principles described herein. As shown in Fig. 16, a windshield washer kiosk payment system 1600 may be integrated into or operatively coupled with the windshield washer kiosk (e.g., Fig. 8, 800) to facilitate payment processing, system control, and communication with external networks.

In the embodiments described herein, the windshield washer kiosk payment system 1600 includes architecture comprising any instrumentality or aggregate of instrumentalities operable to compute, process, transmit, receive, store, and display information associated with operation of the windshield washer kiosk, including payment processing and system control. The windshield washer kiosk payment system 1600 may include hardware, firmware, and software resources configured to manage user interactions, validate payment transactions, and control operation of fluid delivery and user interface components of the windshield washer kiosk.

The windshield washer kiosk payment system 1600 may include a hardware processor 1601 configured to execute machine-readable program code 1603. The machine-readable program code 1603 may include software or firmware instructions that, when executed by the hardware processor 1601, cause the system to perform operations associated with payment validation, system activation, and control of kiosk components. The hardware processor 1601 may be any suitable processing resource, including a microcontroller, central processing unit (CPU), or other hardware processing device.

The windshield washer kiosk payment system 1600 may further include a data storage device 1605 configured to store machine-readable program code 1603, configuration data, transaction records, operational parameters, and other system data. In an embodiment, the data storage device 1605 may include volatile or non-volatile memory, including flash memory, read-only memory (ROM), or random-access memory (RAM).

The windshield washer kiosk payment system 1600 may further include a power management unit (PMU) 1607 configured to regulate and distribute electrical power to system components. The PMU 1607 may be electrically coupled to one or more power sources, including a battery 1609 and/or an alternating current (A/C) power adapter 1611. The PMU 1607 may monitor power levels, control charging of the battery 1609, and provide regulated power to the hardware processor 1601, payment validation system 806, digital display device 966, and other electrical components of the windshield washer kiosk.

The windshield washer kiosk payment system 1600 may also include the payment validation system 806, which may be configured to receive and process user payment inputs. The payment validation system 806 may include one or more input devices such as a near-field communication (NFC) card reader 1643, a magnetic card reader 1645, or other payment interfaces configured to accept contactless or card-based payments. It is appreciated that machine-readable program code associated with the reader may be executed by the hardware processor in order to discern the data from the contactless and card-based payments made at the payment validation system 806.

The payment validation system 806 may be operatively coupled to a digital display device 966 configured to provide visual feedback to a user, including payment prompts, transaction status, and operational instructions. In some embodiments, the digital display device 966 may be integrated with the payment validation system 806 or may be separately mounted on the housing of the windshield washer kiosk.

Upon validation of a payment transaction, the payment validation system 806 may transmit a signal to the hardware processor 1601 indicating authorization. In response, the hardware processor 1601 may initiate operation of one or more system components, including illuminating LEDs and enabling activation of fluid delivery systems such as pumps 1424, as described in connection with other figures herein. In some embodiments, activation of the pumps 1424 may be further conditioned on user actuation of a washer wand trigger, which may be detected via an electrical signal or a sensed change in fluid pressure.

The windshield washer kiosk payment system 1600 may include communication and power interfaces 1596 that facilitate data and power transmission between the payment validation system 806 and other system components. These interfaces may include a bus 1627 configured to transmit data between the hardware processor 1601, data storage device 1605, and peripheral components.

In some embodiments, the communication interfaces may include one or more wired communication ports, such as an Ethernet port 1629, a universal serial bus (USB) port 1631, and an MDB interface port 1633 configured to communicate with vending or transaction-related peripherals. The system may further include one or more security interfaces, such as a SAM interface port 1635 configured to receive secure access modules for encryption and authentication, and a SIM interface port 1637 configured to enable cellular communication. Additional interfaces may include an auxiliary (AUX) port 1639 and a main port 1641, which may be configured to couple the payment validation system 806 to internal wiring harnesses or control systems of the windshield washer kiosk. These ports may carry power and/or data signals between subsystems.

The windshield washer kiosk payment system 1600 may further include a wireless interface device 1613 configured to enable communication with a network 1621 allowing the windshield washer kiosk and windshield washer kiosk payment system 1600 to gain access to the Internet or an intranet. The wireless interface device 1613 may include a radio 1615, a radio frequency (RF) front end 1617, and one or more antennas 1619 configured to transmit and receive wireless signals.

In an embodiment, the wireless interface device 1613 may enable communication with one or more external systems via the network 1621, which may include a wide area network (WAN), local area network (LAN), wireless local area network (WLAN), or wireless wide area network (WWAN). In some embodiments, the network 1621 may include an access point 1623 or a base station 1625 configured to provide connectivity via Wi-Fi, cellular, or other wireless communication protocols. Through the wireless interface device 1613, the windshield washer kiosk payment system 1600 may communicate with remote servers for transaction authorization, system monitoring, software updates, data reporting, or other operational functions. Additionally, through the wireless interface device 1613, the windshield washer kiosk may access temperature data from, for example, a weather forecasting or weather data website that may inform the hardware processor as to whether to trigger activation of the heater pad 1490 in order to prevent freezing of the detergent and/or water. Additionally, or alternatively, the hardware processor may be operatively coupled to a temperature gauge 1647 to determine real-time temperature at the windshield washer kiosk in determining whether to activate or deactivate the heater pad 1490.

As described herein, the brush portion (e.g., Fig. 7, 108) of the washer wand may include a vibration motor 1649 that vibrates a vibrating weight 1651. The vibrating weight 1651 embedded in the brush portion of the washer wand can be activated using either electrical or fluidic means in the embodiments herein. Therefore, in an embodiment, the vibrating weight 1651 is electrically driven by the vibration motor 1649 such that the vibrating weight 1651 mechanically vibrates the entire head of the washer wand. In this embodiment, a second trigger may be formed onto the washer wand such that actuation by the user of the second trigger selectively activates and deactivates the vibrating weight 1651. The vibration motor 1649 may be activated via an electrical signal from the hardware processor after the second trigger is actuated and may also be powered using the power source at the PMU as described herein.

In another embodiment, the vibrating weight 1651 may be vibrated using a fluidic driven method such as hydraulic or pneumatic activation. In this embodiment, the vibrating weight 1651 may be vibrated by the flow of the detergent and water mixture passing through vias (e.g., fluid channels) formed in the brush portion of the washer wand. This example system uses fluid dynamics to induce mechanical oscillation on the vibrating weight 1651. A series of specifically-shaped or angled internal vias may direct fluid into a vane, rotor, or pressure chamber associated with the vibrating weight to vibrate the vibrating weight 1651. In either of these vibration method examples, the vibration of the vibrating weight 1651 may impart a vibration to the brush portion of the washer wand such that the bristles of the brush portion may vibrate at high speeds in order to help with the dislodging of debris from the surface of the windshield.

In operation, the windshield washer kiosk payment system 1600 may coordinate payment processing, user interaction, and system control within the windshield washer kiosk. A user may initiate a transaction via the payment validation system 806, which communicates with the hardware processor 1601 to validate the transaction locally and/or via the network 1621. Upon successful validation, the hardware processor 1601 may enable operation of the windshield washer kiosk, including activation of fluid delivery components in response to user input. The integration of processing, communication, power management, and user interface components within the windshield washer kiosk payment system 1600 enables coordinated and automated operation of the windshield washer kiosk, while supporting both local and network-based transaction processing.

In some embodiments, the hardware processor 1601, machine-readable program code 1603, and data storage device 1605 may be implemented on or integrated with the PCB (e.g., Fig. 14, 1386), thereby forming a central control system for the windshield washer kiosk. It is also appreciated that some of the hardware described in Fig. 14 may be located on the PCB while others may be remote from the PCB but operatively coupled to the hardware processor for execution of the processes and machine-readable program code described herein.

It is appreciated that the windshield washer kiosk payment system 1600 described in connection with Fig. 16 may incorporate any of the features described in connection with Figs. 8-15 and may be implemented using hardware, firmware, software, or any combination thereof.

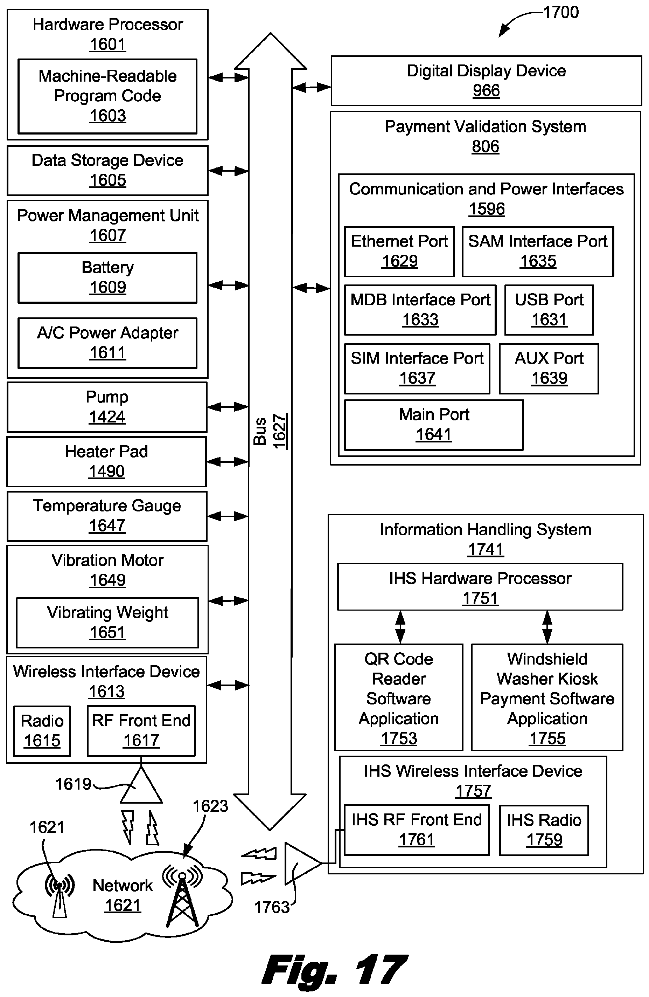

Fig. 17 is a block diagram of a windshield washer kiosk payment system 1700 of the windshield washer kiosk according to another embodiment of the principles described herein. As shown in Fig. 17, a windshield washer kiosk payment system 1700 may be integrated into or operatively coupled with the windshield washer kiosk (e.g., Fig. 8, 800) to facilitate payment processing, system control, and communication with external devices including user-operated information handling systems. The windshield washer kiosk payment system 1700 may include components similar to those described in connection with Fig. 16, while further incorporating remote payment initiation and kiosk activation capabilities in some embodiments herein.

The windshield washer kiosk payment system 1700 may comprise an integrated control and payment architecture configured to process both local and remote payment inputs and to control operation of kiosk subsystems including the pumps 1424, heater pad 1490, and user interface components such as the digital display device 966 and the washer wands (not shown in Fig. 17). The windshield washer kiosk payment system 1700 may include a hardware processor 1601, machine-readable program code 1603, data storage device 1605, PMU 1607, and communication and power interfaces 1596 operatively coupled via a bus 1627.

The windshield washer kiosk payment system 1700 may be configured to receive payment authorization signals from either the payment validation system 806 or from a remotely located information handling system 1741 via the network 1621. Upon receipt of a valid authorization signal, the windshield washer kiosk payment system 1700 may enable operation of the windshield washer kiosk by controlling power delivery and system activation logic.

In the embodiments herein information handling system (IHS) 1741 may be any user-operated electronic device capable of executing software applications and communicating over a network 1621. In various embodiments, the information handling system 1741 may include a smartphone, tablet computing device, laptop computer, or other portable computing system. The information handling system 1741 may be used by a user to initiate a payment transaction and to remotely activate the windshield washer kiosk.

The information handling system 1741 may include an IHS hardware processor 1751 configured to execute machine-readable code instructions associated with payment processing and communication with the windshield washer kiosk payment system 1700. The IHS hardware processor 1751 may execute machine-readable code instructions associated with the QR code reader software application 1753 and the windshield washer kiosk payment software application 1755 to enable user interaction and transaction processing.

In one embodiment, the information handling system 1741 may execute a QR code reader software application 1753 configured to scan a QR code displayed on or adjacent to the windshield washer kiosk. The QR code may encode identifying information including a kiosk identifier, location data, network address, and/or a uniform resource locator (URL) associated with the windshield washer kiosk payment system 1700.

Upon scanning the QR code by the user, the QR code reader software application 1753 may automatically launch or redirect the user to the windshield washer kiosk payment software application 1755 or, in an alternative embodiment, a web-based payment interface. The encoded information may be used to uniquely identify the selected windshield washer kiosk such that payment authorization may be directed to the correct kiosk.

The windshield washer kiosk payment software application 1755 may be executed on the information handling system 1741 to facilitate payment processing and kiosk selection. In a first embodiment, the windshield washer kiosk payment software application 1755 may be launched following QR code scanning and may present a user interface for completing a payment transaction associated with the identified kiosk.

In a second embodiment, the windshield washer kiosk payment software application 1755 may allow a user to select a kiosk without scanning a QR code. In such embodiments, the windshield washer kiosk payment software application 1755 may access location services of the information handling system 1741 to determine the geographic location of the user and identify one or more nearby windshield washer kiosks. The application 1755 may present a list or map of available kiosks or may automatically select the nearest kiosk based on proximity in an embodiment.

In an embodiment, the windshield washer kiosk payment software application 1755 may further transmit payment authorization data via the network 1621 to the windshield washer kiosk payment system 1700. This payment data may include kiosk identification information, payment confirmation, and optionally session or timing information associated with the authorized use of the kiosk.

In order to facilitate communication with the network 1621, the information handling system 1741 may include an information handling system wireless interface device 1757 configured to enable wireless communication with the network 1621. The wireless interface device 1757 may include multiple subcomponents configured to support various communication protocols. In an example embodiment, the information handling system radio 1759 may include transmitter and receiver circuitry configured to communicate using one or more wireless communication standards, including cellular, Wi-Fi, Bluetooth^{®}, or other protocols. The IHS radio 1759 may modulate and demodulate signals transmitted between the information handling system 1741 and the network 1621. Additionally, the information handling system RF front end 1761 may include signal conditioning components such as amplifiers, filters, and impedance matching circuits configured to prepare signals for transmission and reception by the information handling system radio 1759. The IHS RF front end 1761 may improve signal quality and communication reliability. The information handling system antenna 1763 may be configured to transmit and receive electromagnetic signals associated with wireless communication. The IHS antenna 1763 may support multiple frequency bands and communication protocols to enable connectivity with the network 1621 as described herein.

The windshield washer kiosk payment system 1700 may incorporate or be operatively coupled to the payment validation system 806, which may also include, in some embodiments, an NFC card reader (e.g., Fig. 16, 1643) and a magnetic card reader (e.g., Fig. 16, 1645) for local payment processing. Thus, in operations apart from the use of the NFC card reader or the magnetic card reader, the embodiment of Fig. 17 may enable at least two additional distinct payment workflows. In a first workflow, a user scans a QR code using the QR code reader software application 1753, which launches the windshield washer kiosk payment software application 1755. The user completes a payment transaction, and a payment authorization signal is transmitted via the network 1621 to the windshield washer kiosk payment system 1700. In a second workflow, the user directly accesses the windshield washer kiosk payment software application 1755 and selects a kiosk based on location data without scanning a QR code. The windshield washer kiosk payment software application 1755 may determine the nearest kiosk using GPS data or allow manual selection. Upon payment completion, the authorization signal is transmitted to the windshield washer kiosk payment system 1700. In both workflows, the windshield washer kiosk payment system 1700 receives the authorization signal and, in response, enables operation of the windshield washer kiosk, including activation of pumps 1424 and other features as described herein.

The system 1700 may further include communication and power interfaces 1596, including Ethernet port 1629, USB port 1631, MDB interface port 1633, SAM interface port 1635, SIM interface port 1637, AUX port 1639, and main port 1641, to facilitate communication between internal and external components as described herein.

As described herein, the windshield washer kiosk payment system 1700 may also include a wireless interface device 1613 having a radio 1615, RF front end 1617, and antenna 1619 to communicate with the network 1621 via an access point 1623 or base station 1625. By operatively coupling the windshield washer kiosk and the windshield washer kiosk payment system 1700 to the network 1621, the windshield washer kiosk may receive weather data and payment data in real time.

The windshield washer kiosk payment system 1700 may transmit control signals that affect the operation of physical components including pumps 1424 and heater pad 1490. Upon receipt of a payment authorization signal from the windshield washer kiosk payment system 1700, the hardware processor 1601 may enable the pumps 1424 to deliver fluid upon actuation of a washer wand trigger, as described in previous figures. The hardware processor 1601 may also control the heater pad 1490 based on environmental inputs, including data received from a temperature gauge 1647 or from remote data sources accessed via the network 1621 as described herein.

It is appreciated that the windshield washer kiosk payment system 1700 provides a hybrid payment architecture supporting both local and remote payment processing. The integration of the information handling system 1741 with the windshield washer kiosk payment system 1700 enables flexible, scalable, and contactless payment options while maintaining compatibility with traditional on-site payment mechanisms.

Any of the features described in connection with Figs. 8-16 may be incorporated into the embodiment of Fig. 17. The systems and methods described herein may be implemented using hardware, firmware, software, or any combination thereof.

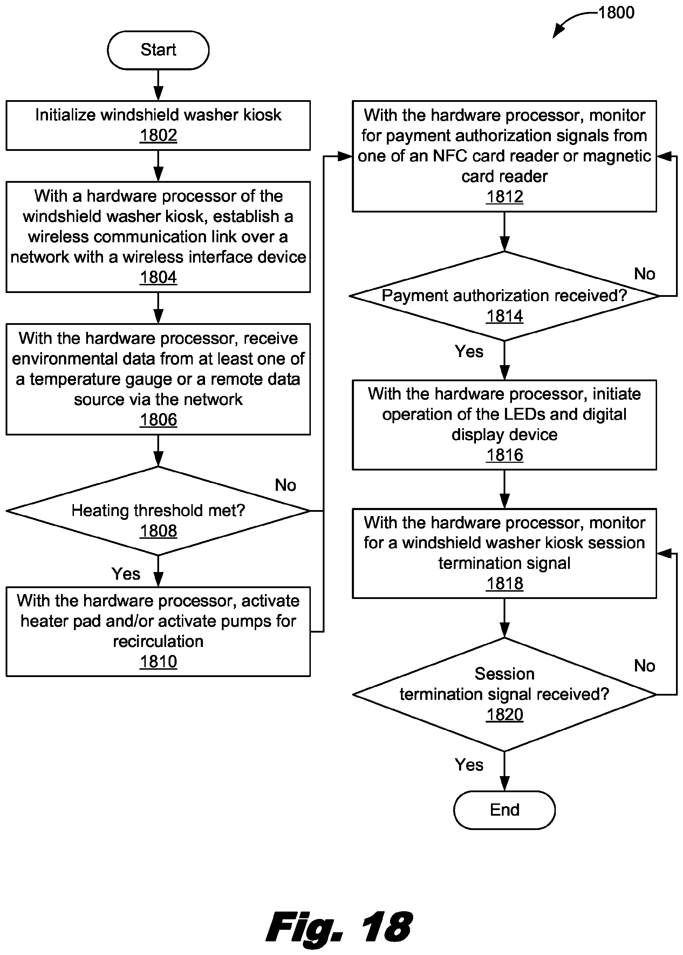

Fig. 18 is a flowchart illustrating a method 1800 of operating a windshield washer kiosk, including environmental monitoring, system conditioning, payment authorization, and user session control. It is appreciated that any processes or steps described in connection with Fig. 18 may be conducted at or by those windshield washer kiosks described in connection with any of Figs. 1 through 17.

At block 1802, the method 1800 includes initializing a windshield washer kiosk. In an embodiment, initialization may include powering on the windshield washer kiosk and activating a hardware processor operatively coupled to one or more system components including a payment validation system, one or more pumps, a water mixing manifold, one or more detergent reservoirs, a heater element, and one or more user interface devices. In an embodiment, maintenance personnel may power on the windshield washer kiosk by actuating a button or switch (e.g., placed in a discreate or covered location such as behind the PCB compartment door) or by operatively coupling a power source to a power management unit within the windshield washer kiosk. Initialization may further include performing one or more diagnostic routines to determine operational readiness of the windshield washer kiosk including verifying electrical connections, confirming fluid levels within one or more detergent reservoirs, and confirming operability of sensors and communication interfaces. In an embodiment, the execution of various diagnostic routines may be completed by a hardware processor of the windshield washer kiosk executing machine-readable code instructions that are stored on a data storage device and/or signaling firmware to engage in these diagnostic processes. In some embodiments, initialization may also include loading one or more stored configuration parameters such as pricing structures, cleaning modes, temperature thresholds, and maintenance settings into memory accessible by the hardware processor such as the data storage device described in connection with, at least, Figs. 16 and 17.

At block 1804, the method 1800 includes, with the hardware processor of the windshield washer kiosk, establishing a wireless communication link over a network with a wireless interface device. In an embodiment, the wireless interface device may include a network interface adapter configured to communicate via one or more wireless communication protocols including Wi-Fi, cellular communication, Bluetooth, or other wireless communication standards. Establishing the wireless communication link may include connecting to a network such as an intranet or the internet and to a specific remote server, a cloud-based management platform, or one or more adjacent windshield washer kiosks. In some embodiments, this communication link may allow the windshield washer kiosk to transmit operational data, receive configuration updates, synchronize usage sessions with adjacent kiosks, or receive remote commands and diagnostics instructions. In further embodiments, the communication link may facilitate remote payment processing or mobile application-based payment authorization as described herein.

At block 1806, the method 1800 includes, with the hardware processor, receiving environmental data from at least one of a temperature gauge or a remote data source via the network. In an embodiment, the temperature gauge may include a thermistor, thermostat, or other temperature sensing device positioned within or external to the housing of the windshield washer kiosk. The environmental data may include ambient air temperature, internal fluid temperature, humidity, or other environmental conditions that may affect operation of the windshield washer kiosk. In some embodiments, environmental data may additionally or alternatively be received from a remote data source such as a weather service accessed via the network. The hardware processor may continuously or periodically monitor this environmental data to determine whether operating conditions require modification of system behavior, including activation of heating elements, the heating pad, or fluid management routines.

At block 1808, the method 1800 includes determining whether a heating threshold has been met based on the received environmental data. In an embodiment, the heating threshold may correspond to a predetermined temperature value at or near freezing conditions, such as a temperature at which water, detergents, or other fluids within the windshield washer kiosk may begin to freeze. The hardware processor may compare the received environmental data to one or more stored threshold values to determine whether heating or other protective measures should be activated. In some embodiments, multiple threshold values may be used to implement staged responses, such as initiating fluid recirculation using the pumps at a first threshold and activating a heater pad or other heating elements at a second, lower threshold.

At block 1810, in response to determining that the heating threshold has been met, the method 1800 includes, with the hardware processor, activating a heater pad or other heating element as well as potentially activating pumps in order to perform a recirculation process. In an embodiment, the heater pad (e.g., Fig. 14, 1490) may be positioned within or adjacent to a fluid reservoir, a water mixing manifold, or fluid delivery channels in order to maintain fluid temperature above freezing. Activation of the heater pad may include supplying electrical power to a resistive heating element and regulating that power based on feedback from temperature sensors. In some embodiments, the hardware processor may modulate operation of the heater pad to maintain fluid within a target temperature range.

At block 1812, the method 1800 includes, with the hardware processor, monitoring for payment authorization signals from one of a near-field communication (NFC) card reader or a magnetic card reader. In an embodiment, the hardware processor may continuously monitor one or more input devices associated with a payment validation system for signals indicating that a user has initiated a payment transaction. These signals may include data received from a contactless payment device, insertion or swiping of a payment card, or other payment input methods described herein. In some embodiments, the payment validation system may further include additional payment modalities such as QR code-based payments, mobile application-based payments, or cash and coin inputs, all of which may be monitored by the hardware processor. Monitoring may include detecting initial payment input as well as receiving confirmation signals indicating successful authorization from a local or remote payment processing system.

At block 1814, the method 1800 includes determining whether payment authorization has been received. In an embodiment, the hardware processor may evaluate received payment data and corresponding authorization responses to determine whether a transaction has been successfully completed. When payment authorization has not been received, the method may return to block 1812 to continue monitoring for valid payment signals. When payment authorization has been received, the method proceeds to block 1816. In some embodiments, the hardware processor may also log transaction data and associate the authorized payment with a corresponding usage session of the windshield washer kiosk for the purpose of, for example, monitoring for repeat customer data and providing discounts to frequent users.

At block 1816, the method 1800 includes, with the hardware processor, initiating operation of one or more light emitting diodes (LEDs) and a digital display device. In an embodiment, activation of the LEDs may provide visual indications to the user regarding system status, including readiness for use, identification of an available washer wand, or confirmation of payment authorization among other indicative purposes. The digital display device may present information including usage instructions, session time remaining, selected cleaning parameters, or system messages. In some embodiments, the digital display device may include a touch-sensitive interface allowing the user to select cleaning modes, detergent types, or other operational parameters with any modifications to pricing being automatically charged to, for example, a credit card used to initially purchase those services. Activation of these user interface components may therefore guide the user through operation of the windshield washer kiosk and enhance usability including any requirements for additional payments if necessary due to, for example, additional requested services.

At block 1818, the method 1800 includes, with the hardware processor, monitoring for a windshield washer kiosk session termination signal. In an embodiment, the session termination signal may be generated based on one or more conditions including expiration of a predetermined usage time associated with the authorized payment, detection of user inactivity, completion of a selected cleaning cycle, or receipt of a manual termination input. Still further, the session termination signal may be generated based on inoperability conditions at the windshield washer kiosk such as detected malfunctioning of the windshield washer kiosk or depletion of detergent used by the windshield washer kiosk as described herein. The hardware processor may continuously monitor system inputs and operational parameters to determine whether a termination condition has been detected. In some embodiments, monitoring may also include tracking fluid usage, pump operation, or trigger actuation associated with one or more washer wands and may signal to the hardware processor that the session will need to be terminated.

It is appreciated that at block 1818, the method 1800 continues with the user operating the washer wand as described herein. This process may also include the hardware processor monitoring for activation of one or more triggers such as the wand trigger used to cause fluid to be ejected out of the sprayer portion as well as the weight vibration trigger. For example, the hardware processor may detect that the wand trigger is actuated by the user by receiving an electrical signal from a trigger detector placed under the wand trigger or by the pump detecting a change in pressure due to the user actuating the wand trigger. Similarly, another trigger detector may be placed under the weight vibration trigger that also indicates to the hardware processor to, via an electrical connection, activate a vibration motor that vibrates a vibrating weight within the head of the washer wand as described herein.

At block 1820, the method 1800 includes determining whether a session termination signal has been received. When the session termination signal has not been received, the method returns to block 1818 with the hardware processor continuing to monitor for any session termination signals. When a session termination signal has been received, the method 1800 proceeds to terminate the active session thereby ending the method 1800 described herein. In some embodiments, termination may include preparing the windshield washer kiosk and its associated systems for shutdown or transition to an idle state.

Upon determining that the session termination signal has been received, the method 1800 ends. In an embodiment, ending the method 1800 may further include deactivating one or more system components including pumps, valves, and user interface devices, and optionally performing post-session operations such as depressurizing fluid lines via activation of the pump to draw excess fluid out from the washer wand supply hose, initiating fluid evacuation routines, or transmitting usage and diagnostic data to a remote system via the established wireless communication link.

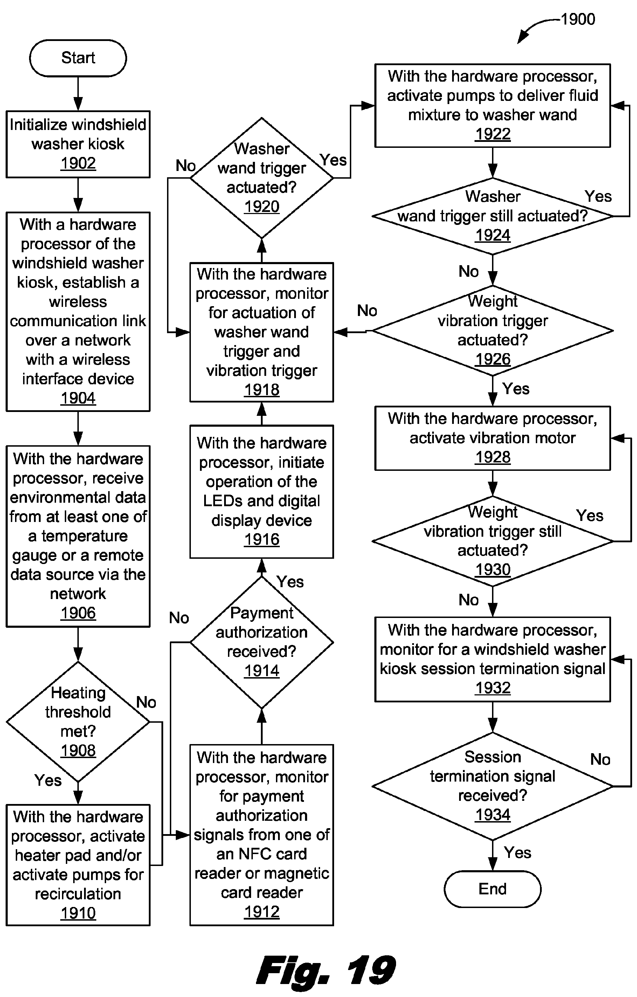

Fig. 19 is a flowchart illustrating a method 1900 of operating a windshield washer kiosk, including environmental conditioning, payment authorization via a card-based interface, and user-controlled actuation of fluid delivery and vibration features of a washer wand. It is appreciated that any processes or steps described in connection with Fig. 19 may be conducted at or by those windshield washer kiosks described in connection with any of Figs. 1 through 17.

At block 1902, the method 1900 includes initializing a windshield washer kiosk. In an embodiment, initialization may include powering on the windshield washer kiosk and activating a hardware processor operatively coupled to system components including a payment validation system, one or more pumps, a mixing manifold, one or more detergent reservoirs, a heater element, and one or more user interface devices as described herein. Initialization may further include executing one or more diagnostic routines to verify system readiness, including confirming communication with sensors, verifying availability of electrical power, and determining fluid levels within one or more reservoirs.

In some embodiments, initialization may also include loading operational parameters into memory, including pricing information, usage duration limits, detergent selection configurations, temperature thresholds, and user interface settings. Additionally, initialization may include placing the system into an idle monitoring state in which the hardware processor awaits environmental inputs and user interaction.

At block 1904, the method 1900 includes, with the hardware processor, establishing a wireless communication link over a network with a wireless interface device. In an embodiment, the wireless communication link may be established using one or more wireless protocols including Wi-Fi, cellular communication, or Bluetooth. The wireless interface device may be configured to communicate with remote servers, cloud-based platforms, or adjacent windshield washer kiosks.

In some embodiments, establishing the communication link enables the windshield washer kiosk to transmit operational data, receive remote configuration updates, and participate in coordinated operation with nearby kiosks. Additionally, the communication link may facilitate communication with remote payment processing systems for validating payment transactions initiated through the payment validation system.

At block 1906, the method 1900 includes, with the hardware processor, receiving environmental data from at least one of a temperature gauge or a remote data source via the network. In an embodiment, the environmental data may include ambient air temperature, internal fluid temperature, or other environmental parameters relevant to operation of the windshield washer kiosk. The hardware processor may receive this data continuously or periodically and store the data in memory for comparison against one or more predefined thresholds. In some embodiments, environmental data may be supplemented with data received from remote sources such as weather services accessed via the wireless communication link. This environmental monitoring allows the system to proactively respond to conditions that may impact system performance, including freezing conditions.

At block 1908, the method 1900 includes determining whether a heating threshold has been met based on the received environmental data. In an embodiment, the hardware processor compares the environmental data to one or more threshold values corresponding to freezing or near-freezing conditions. Where the environmental data indicates that the temperature is below a predetermined threshold, the system determines that heating is required. In some embodiments, multiple thresholds may be used to trigger different protective actions, including activation of heating elements or initiation of fluid recirculation or evacuation routines.

At block 1910, in response to determining that the heating threshold has been met, the method 1900 includes, with the hardware processor, activating a heater pad and/or other heating element. In an embodiment, the heater pad may be positioned adjacent to or within a fluid reservoir or fluid delivery components to maintain fluid temperature above freezing.

Activation of the heater pad may include supplying electrical power to a resistive heating element and regulating the output based on feedback from temperature sensors. In some embodiments, the hardware processor may modulate operation of the heater pad to maintain fluid within a target temperature range. Maintaining elevated fluid temperatures may also enhance cleaning performance by improving the effectiveness of detergent solutions.

At block 1912, the method 1900 includes, with the hardware processor, monitoring for payment authorization signals from one of a near-field communication (NFC) card reader or a magnetic card reader. In an embodiment, the payment validation system may include an NFC interface configured to receive contactless payment data from a payment card or mobile device, as well as a magnetic stripe reader configured to read payment information from a swiped card.

The hardware processor may continuously monitor these input devices for signals indicating initiation of a payment transaction. In some embodiments, the payment validation system may further include chip-based card readers or other card-present payment interfaces. Upon detecting input from the NFC card reader or magnetic card reader, the hardware processor may process the received data and transmit it to a local or remote payment processing system for authorization.

At block 1914, the method 1900 includes determining whether payment authorization has been received. In an embodiment, the hardware processor evaluates whether a valid authorization response has been received from the payment processing system. When payment authorization has not been received, the method returns to block 1912, and the hardware processor continues monitoring for valid payment signals. When payment authorization has been successfully received, the method proceeds to block 1916. In some embodiments, the hardware processor may also log transaction details and associate the authorized payment with a corresponding user session.

At block 1916, the method 1900 includes, with the hardware processor, initiating operation of one or more LEDs and a digital display device. In an embodiment, activation of the LEDs may provide visual feedback to the user indicating that payment has been accepted and that the system is ready for use. The digital display device may present instructions, usage information, and system status messages to the user. In some embodiments, the digital display device may include a touch-sensitive interface allowing the user to interact with the system, select cleaning options, or view remaining session time. The activation of these user interface elements facilitates user engagement and guides operation of the windshield washer kiosk.

At block 1918, the method 1900 includes, with the hardware processor, monitoring for actuation of a washer wand trigger and a vibration trigger. In an embodiment, the washer wand may include a first trigger configured to control fluid dispensing and a second trigger configured to control activation of a vibration mechanism associated with a brush portion of the washer wand. The hardware processor may continuously monitor input signals from these triggers to determine user intent. In some embodiments, the triggers may be independent controls, allowing the user to selectively activate fluid flow, vibration, or both. Monitoring may include detecting initial actuation, duration of actuation, and release of each trigger. As described herein, the wand trigger may generate an electrical signal or may cause a detectable change in system conditions, such as fluid pressure or flow, which may be sensed by the system and communicated to the hardware processor. Upon detecting such user input following payment authorization, the hardware processor may cause one or more pumps to activate, thereby delivering fluid through the washer wand for cleaning operations.

At block 1920, the method 1900 includes determining whether the washer wand trigger has been actuated. When the washer wand trigger has not been actuated, the method returns to block 1918 and continues monitoring for user input. When the washer wand trigger has been actuated, the method proceeds to block 1922. In this manner, fluid delivery is initiated only upon user command, allowing the user to control when cleaning fluid is dispensed.

At block 1922, the method 1900 includes, with the hardware processor, activating one or more pumps to deliver a fluid mixture to the washer wand. In an embodiment, activation of the pumps causes a mixture of water and detergent, or a pre-mixed cleaning solution, to be conveyed through one or more fluid delivery channels and discharged from a terminal end of the washer wand as described herein.

In some embodiments, the hardware processor may control the speed of the fluid pumps or output pressure based on system settings or trigger position. Fluid delivery may be continuous while the washer wand trigger remains actuated in some embodiments, allowing the user to apply cleaning fluid as needed during operation.

At block 1924, the method 1900 includes determining whether the washer wand trigger remains actuated. When the washer wand trigger continues to be actuated, the method returns to block 1922 and continues fluid delivery. However, when the washer wand trigger is no longer actuated, the method proceeds to evaluate additional user inputs, including actuation of the vibration trigger. This structure allows fluid delivery to be dynamically controlled by the user in real time.

At block 1926, the method 1900 includes determining whether a weight vibration trigger has been actuated. In an embodiment, the weight vibration trigger may correspond to a control input associated with activation of a vibration mechanism within the washer wand. When the weight vibration trigger has not been actuated, the method returns to block 1918 and continues monitoring for user input. When the weight vibration trigger has been actuated, the method proceeds to block 1928. At block 1928, the method 1900 includes, with the hardware processor, activating a vibration motor associated with the washer wand. In an embodiment, the vibration motor may be operatively coupled to a vibrating weight positioned within a brush portion of the washer wand.

Activation of the vibration motor may cause oscillatory motion of the brush portion, enhancing removal of debris from a surface being cleaned. In some embodiments, the vibration motor may be electrically powered via conductors extending along the washer wand or alternatively may be driven by fluid flow in a fluidic vibration system. The vibration feature may be selectively controlled by the user via the vibration trigger similar to the washer wand trigger described herein. This allows the user to further customize the cleaning process of the surfaces of the vehicle.

At block 1930, the method 1900 includes determining whether the weight vibration trigger remains actuated. When the vibration trigger continues to be actuated, the method returns to block 1928 and maintains operation of the vibration motor. When the vibration trigger is no longer actuated, the method proceeds to block 1932. This allows the user to selectively enable and disable the vibration function during operation.

At block 1932, the method 1900 includes, with the hardware processor, monitoring for a windshield washer kiosk session termination signal. In an embodiment, the session termination signal may be generated based on one or more conditions including expiration of a predetermined usage time associated with the authorized payment, detection of user inactivity, completion of a selected cleaning cycle, or receipt of a manual termination input. Still further, the session termination signal may be generated based on inoperability conditions at the windshield washer kiosk such as detected malfunctioning of the windshield washer kiosk or depletion of detergent used by the windshield washer kiosk as described herein. The hardware processor may continuously monitor system inputs and operational parameters to determine whether a termination condition has been detected. In some embodiments, monitoring may also include tracking fluid usage, pump operation, or trigger actuation associated with one or more washer wands and may signal to the hardware processor that the session will need to be terminated.

It is appreciated that, at block 1932, the method 1900 continues with the user operating the washer wand as described herein. This process may also include the hardware processor monitoring for activation of one or more triggers such as the wand trigger used to cause fluid to be ejected out of the sprayer portion as well as the weight vibration trigger. For example, the hardware processor may detect that the wand trigger is actuated by the user by receiving an electrical signal from a trigger detector placed under the wand trigger or by the pump detecting a change in pressure due to the user actuating the wand trigger. Similarly, another trigger detector may be placed under the weight vibration trigger that also indicates to the hardware processor to, via an electrical connection, activate a vibration motor that vibrates a vibrating weight within the head of the washer wand as described herein.

At block 1934, the method 1900 includes determining whether a session termination signal has been received. When the session termination signal has not been received, the method returns to block 1932 with the hardware processor continuing to monitor for any session termination signals. When a session termination signal has been received, the method 1900 proceeds to terminate the active session thereby ending the method 1900 described herein. In some embodiments, termination may include preparing the windshield washer kiosk and its associated systems for shutdown or transition to an idle state.

Upon determining that the session termination signal has been received, the method 1900 ends. In an embodiment, ending the method 1900 may further include deactivating one or more system components including pumps, valves, and user interface devices, and optionally performing post-session operations such as depressurizing fluid lines via activation of the pump to draw excess fluid out from the washer wand supply hose, initiating fluid evacuation routines, or transmitting usage and diagnostic data to a remote system via the established wireless communication link.

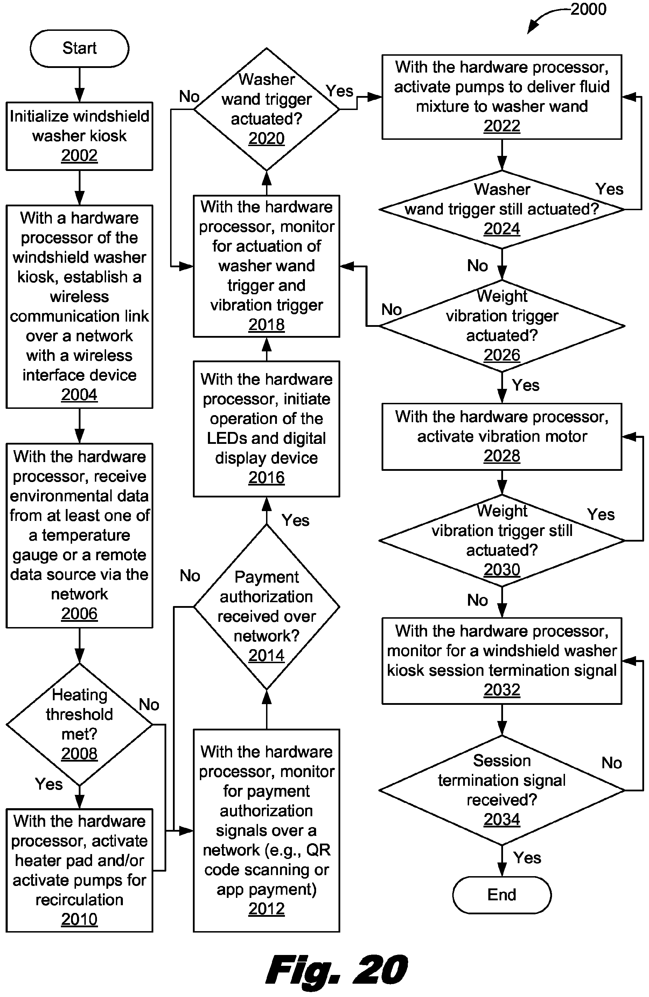

Fig. 20 is a flowchart illustrating a method 2000 of operating a windshield washer kiosk, including environmental conditioning, payment authorization via a card-based interface, and user-controlled actuation of fluid delivery and vibration features of a washer wand. It is appreciated that any processes or steps described in connection with Fig. 20 may be conducted at or by those windshield washer kiosks described in connection with any of Figs. 1 through 17.

At block 2002, the method 2000 includes initializing a windshield washer kiosk. In an embodiment, initialization may include powering on the windshield washer kiosk and activating a hardware processor operatively coupled to system components including a payment validation system, one or more pumps, a mixing manifold, one or more detergent reservoirs, a heater element, and one or more user interface devices as described herein. Initialization may further include executing one or more diagnostic routines to verify system readiness, including confirming communication with sensors, verifying availability of electrical power, and determining fluid levels within one or more reservoirs.

In some embodiments, initialization may also include loading operational parameters into memory, including pricing information, usage duration limits, detergent selection configurations, temperature thresholds, and user interface settings. Additionally, initialization may include placing the system into an idle monitoring state in which the hardware processor awaits environmental inputs and user interaction.

At block 2004, the method 2000 includes, with the hardware processor, establishing a wireless communication link over a network with a wireless interface device. In an embodiment, the wireless communication link may be established using one or more wireless protocols including Wi-Fi, cellular communication, or Bluetooth. The wireless interface device may be configured to communicate with remote servers, cloud-based platforms, or adjacent windshield washer kiosks.

In some embodiments, establishing the communication link enables the windshield washer kiosk to transmit operational data, receive remote configuration updates, and participate in coordinated operation with nearby kiosks. Additionally, the communication link may facilitate communication with remote payment processing systems for validating payment transactions initiated through the payment validation system.

At block 2006, the method 2000 includes, with the hardware processor, receiving environmental data from at least one of a temperature gauge or a remote data source via the network. In an embodiment, the environmental data may include ambient air temperature, internal fluid temperature, or other environmental parameters relevant to operation of the windshield washer kiosk. The hardware processor may receive this data continuously or periodically and store the data in memory for comparison against one or more predefined thresholds. In some embodiments, environmental data may be supplemented with data received from remote sources such as weather services accessed via the wireless communication link. This environmental monitoring allows the system to proactively respond to conditions that may impact system performance, including freezing conditions.

At block 2008, the method 2000 includes determining whether a heating threshold has been met based on the received environmental data. In an embodiment, the hardware processor compares the environmental data to one or more threshold values corresponding to freezing or near-freezing conditions. Where the environmental data indicates that the temperature is below a predetermined threshold, the system determines that heating is required. In some embodiments, multiple thresholds may be used to trigger different protective actions, including activation of heating elements or initiation of fluid recirculation or evacuation routines.

At block 2010, in response to determining that the heating threshold has been met, the method 2000 includes, with the hardware processor, activating a heater pad and/or other heating element. In an embodiment, the heater pad may be positioned adjacent to or within a fluid reservoir or fluid delivery components to maintain fluid temperature above freezing.

Activation of the heater pad may include supplying electrical power to a resistive heating element and regulating the output based on feedback from temperature sensors. In some embodiments, the hardware processor may modulate operation of the heater pad to maintain fluid within a target temperature range. Maintaining elevated fluid temperatures may also enhance cleaning performance by improving the effectiveness of detergent solutions.

At block 2012, the method 2000 includes, with the hardware processor, monitoring for payment authorization signals over a network.

The hardware processor may continuously monitor these input devices for signals indicating initiation of a payment transaction. In some embodiments, the payment validation system may further include chip-based card readers or other card-present payment interfaces. Upon detecting input from the NFC card reader or magnetic card reader, the hardware processor may process the received data and transmit it to a local or remote payment processing system for authorization. As described herein, the payment validation system 806 may include a QR code that a user may scan using, for example, a smartphone. By scanning the OR code associated with the payment validation system, the user may access a website or software application executing on the smartphone and provide payment wirelessly to the windshield washer kiosk. In an embodiment, therefore, the windshield washer kiosk may include a wireless coupling device such as a wireless interface adapter or network interface device the operatively couples the windshield washer kiosk to an intranet or the internet so that payment input at the user's smartphone may be identified and accepted, wirelessly, at the windshield washer kiosk. In an embodiment, the payment validation system may also include the use of a software application executing on, for example, the user's smartphone that, when the user provides payment details, transmits authentication data indicating, wirelessly, to the windshield washer kiosk that payment has been received and activation of at least one of the washer wands for use by the user is authorized.

At block 2014, the method 2000 includes determining whether payment authorization has been received. In an embodiment, the hardware processor evaluates whether a valid authorization response has been received from the payment processing system. When payment authorization has not been received, the method returns to block 2012, and the hardware processor continues monitoring for valid payment signals. When payment authorization has been successfully received, the method proceeds to block 2016. In some embodiments, the hardware processor may also log transaction details and associate the authorized payment with a corresponding user session.

At block 2016, the method 2000 includes, with the hardware processor, initiating operation of one or more LEDs and a digital display device. In an embodiment, activation of the LEDs may provide visual feedback to the user indicating that payment has been accepted and that the system is ready for use. The digital display device may present instructions, usage information, and system status messages to the user. In some embodiments, the digital display device may include a touch-sensitive interface allowing the user to interact with the system, select cleaning options, or view remaining session time. The activation of these user interface elements facilitates user engagement and guides operation of the windshield washer kiosk.

At block 2018, the method 2000 includes, with the hardware processor, monitoring for actuation of a washer wand trigger and a vibration trigger. In an embodiment, the washer wand may include a first trigger configured to control fluid dispensing and a second trigger configured to control activation of a vibration mechanism associated with a brush portion of the washer wand. The hardware processor may continuously monitor input signals from these triggers to determine user intent. In some embodiments, the triggers may be independent controls, allowing the user to selectively activate fluid flow, vibration, or both. Monitoring may include detecting initial actuation, duration of actuation, and release of each trigger. As described herein, the wand trigger may generate an electrical signal or may cause a detectable change in system conditions, such as fluid pressure or flow, which may be sensed by the system and communicated to the hardware processor. Upon detecting such user input following payment authorization, the hardware processor may cause one or more pumps to activate, thereby delivering fluid through the washer wand for cleaning operations.

At block 2020, the method 2000 includes determining whether the washer wand trigger has been actuated. When the washer wand trigger has not been actuated, the method returns to block 2018 and continues monitoring for user input. When the washer wand trigger has been actuated, the method proceeds to block 2022. In this manner, fluid delivery is initiated only upon user command, allowing the user to control when cleaning fluid is dispensed.

At block 2022, the method 2000 includes, with the hardware processor, activating one or more pumps to deliver a fluid mixture to the washer wand. In an embodiment, activation of the pumps causes a mixture of water and detergent, or a pre-mixed cleaning solution, to be conveyed through one or more fluid delivery channels and discharged from a terminal end of the washer wand as described herein.

In some embodiments, the hardware processor may control the speed of the fluid pumps or output pressure based on system settings or trigger position. Fluid delivery may be continuous while the washer wand trigger remains actuated in some embodiments, allowing the user to apply cleaning fluid as needed during operation.

At block 2024, the method 2000 includes determining whether the washer wand trigger remains actuated. When the washer wand trigger continues to be actuated, the method returns to block 2022 and continues fluid delivery. However, when the washer wand trigger is no longer actuated, the method proceeds to evaluate additional user inputs, including actuation of the vibration trigger. This structure allows fluid delivery to be dynamically controlled by the user in real time.

At block 2026, the method 2000 includes determining whether a weight vibration trigger has been actuated. In an embodiment, the weight vibration trigger may correspond to a control input associated with activation of a vibration mechanism within the washer wand. When the weight vibration trigger has not been actuated, the method returns to block 2018 and continues monitoring for user input. When the weight vibration trigger has been actuated, the method proceeds to block 2028. At block 2028, the method 2000 includes, with the hardware processor, activating a vibration motor associated with the washer wand. In an embodiment, the vibration motor may be operatively coupled to a vibrating weight positioned within a brush portion of the washer wand.

Activation of the vibration motor may cause oscillatory motion of the brush portion, enhancing removal of debris from a surface being cleaned. In some embodiments, the vibration motor may be electrically powered via conductors extending along the washer wand, or alternatively may be driven by fluid flow in a fluidic vibration system. The vibration feature may be selectively controlled by the user via the vibration trigger similar to the washer wand trigger described herein. This allows the user to further customize the cleaning process of the surfaces of the vehicle.

At block 2030, the method 2000 includes determining whether the weight vibration trigger remains actuated. When the vibration trigger continues to be actuated, the method returns to block 2028 and maintains operation of the vibration motor. When the vibration trigger is no longer actuated, the method proceeds to block 2032. This allows the user to selectively enable and disable the vibration function during operation.

At block 2032, the method 2000 includes, with the hardware processor, monitoring for a windshield washer kiosk session termination signal. In an embodiment, the session termination signal may be generated based on one or more conditions including expiration of a predetermined usage time associated with the authorized payment, detection of user inactivity, completion of a selected cleaning cycle, or receipt of a manual termination input. Still further, the session termination signal may be generated based on inoperability conditions at the windshield washer kiosk such as detected malfunctioning of the windshield washer kiosk or depletion of detergent used by the windshield washer kiosk as described herein. The hardware processor may continuously monitor system inputs and operational parameters to determine whether a termination condition has been detected. In some embodiments, monitoring may also include tracking fluid usage, pump operation, or trigger actuation associated with one or more washer wands and may signal to the hardware processor that the session will need to be terminated.

It is appreciated that at block 2032, the method 2000 continues with the user operating the washer wand as described herein. This process may also include the hardware processor monitoring for activation of one or more triggers such as the wand trigger used to cause fluid to be ejected out of the sprayer portion as well as the weight vibration trigger. For example, the hardware processor may detect that the wand trigger is actuated by the user by receiving an electrical signal from a trigger detector placed under the wand trigger or by the pump detecting a change in pressure due to the user actuating the wand trigger. Similarly, another trigger detector may be placed under the weight vibration trigger that also indicates to the hardware processor to, via an electrical connection, activate a vibration motor that vibrates a vibrating weight within the head of the washer wand as described herein.

At block 2034, the method 2000 includes determining whether a session termination signal has been received. When the session termination signal has not been received, the method returns to block 2032 with the hardware processor continuing to monitor for any session termination signals. When a session termination signal has been received, the method 2000 proceeds to terminate the active session thereby ending the method 2000 described herein. In some embodiments, termination may include preparing the windshield washer kiosk and its associated systems for shutdown or transition to an idle state.

Upon determining that the session termination signal has been received, the method 2000 ends. In an embodiment, ending the method 2000 may further include deactivating one or more system components including pumps, valves, and user interface devices, and optionally performing post-session operations such as depressurizing fluid lines via activation of the pump to draw excess fluid out from the washer wand supply hose, initiating fluid evacuation routines, or transmitting usage and diagnostic data to a remote system via the established wireless communication link.

Aspects of the present system and method are described herein with reference to flowchart illustrations and/or block diagrams of methods, apparatus (systems) and computer program products according to embodiments of the principles described herein. Each block of the flowchart illustrations and block diagrams, and combinations of blocks in the flowchart illustrations and block diagrams, may be implemented by computer usable program code. The computer usable program code may be provided to a processor of a general purpose computer, special purpose computer, or other programmable data processing apparatus to produce a machine, such that the computer usable program code, when executed via, for embodiment, the processor of a computer or other programmable data processing apparatus, implement the functions or acts specified in the flowchart and/or block diagram block or blocks. In one embodiment, the computer usable program code may be embodied within a computer readable storage medium; the computer readable storage medium being part of the computer program product. In one embodiment, the computer readable storage medium is a non-transitory computer readable medium.

The preceding description has been presented to illustrate and describe embodiments of the principles described. This description is not intended to be exhaustive or to limit these principles to any precise form disclosed. Many modifications and variations are possible in light of the above teaching.

## Claims

1. A windshield washer kiosk, comprising:
a housing;
a fluid delivery system disposed within the housing and including:
a fluid reservoir configured to store at least one fluid;
a pump fluidically coupled to the fluid reservoir; and
at least one fluid conduit;
a washer wand fluidically coupled to the fluid delivery system and configured to dispense the cleaning fluid; and
a payment interface operatively coupled to a hardware processor, wherein the hardware processor is configured to:
receive a payment authorization signal from the payment interface; and
in response to receiving the payment authorization signal, activate the fluid delivery system to enable dispensing of the fluid through the washer wand.

2. The windshield washer kiosk of claim 1, further comprising:
a plurality of electronically controlled valves fluidically coupled to the fluid delivery system, wherein the hardware processor is configured to:
selectively actuate the plurality of electronically controlled valves to define a plurality of fluid flow paths; and
operate the pump in a single flow direction while altering an effective direction of fluid movement through the fluid delivery system based on actuation of the plurality of electronically controlled valves.

3. The windshield washer kiosk of claim 2, wherein the hardware processor is further configured to establish an evacuation flow path configured to remove fluid from the washer wand, and/or a recirculation flow path that returns the fluid to the fluid reservoir.

4. The windshield washer kiosk of any of claims 2 or 3 further comprising:
at least one temperature sensor, wherein the hardware processor is configured to actuate the plurality of electronically controlled valves based on temperature data.

5. The windshield washer kiosk of any of the preceding claims, further comprising:
a vibration motor; and
a vibrating weight operatively coupled to the vibration motor within a head portion of the washer wand to, when vibrated by the vibration motor, impart a vibrating motion to the head of the washer wand.

6. The windshield washer kiosk of any of the preceding claims, further comprising:
a mixing manifold fluidically coupled to the fluid reservoir and a water source;
wherein the hardware processor is configured to selectively provide at least one of:
a pre-mixed cleaning fluid from the fluid reservoir, or
a mixture of water and a detergent combined within the mixing manifold.

7. The windshield washer kiosk of any of the preceding claims, further comprising:
a plurality of fluid reservoirs, each configured to store a different cleaning fluid, and
a selection circuit operatively coupled to the hardware processor, wherein the hardware processor is configured to selectively control which of the plurality of fluid reservoirs supplies cleaning fluid to the fluid delivery system.

8. The windshield washer kiosk of any of the preceding claims, wherein the payment interface is configured to receive payment via at least one of:
a near-field communication (NFC) device;
a magnetic stripe card reader;
a chip card reader;
a mobile device-based payment application;
a QR code-based payment system; and
cash input.

9. A method of operating a windshield washer kiosk, comprising:
receiving, at a payment interface, payment data from a user;
authorizing the payment data;
activating, with a hardware processor, a fluid delivery system comprising a fluid reservoir configured to store at least one cleaning fluid, a pump fluidically coupled to the fluid reservoir, and at least one fluid conduit leading to a washer wand in response to authorizing the payment data;
dispensing, in response to user input, a cleaning fluid through the washer wand; and
monitoring for a session termination condition.

10. The method of claim 10, further comprising
monitoring environmental data and activating a heating element when a temperature threshold is met, and/or
actuating a pump in response to actuation of a trigger on the washer wand by a user, and/or
activating a vibration motor to vibrate a weight in response to actuation of a second trigger on the washer wand, and/or
evacuating fluid from the washer wand in response to detecting a temperature below a threshold.

11. The method of any of claims 9 or 10, further comprising:
selectively actuating a plurality of electronically controlled valves to define a plurality of fluid flow paths, and operating a pump in a single flow direction while altering an effective direction of fluid movement through the fluid delivery system based on actuation of the plurality of electronically controlled valves.

12. A windshield washer system, comprising:
a first windshield washer kiosk including a first hardware processor;
a second windshield washer kiosk including a second hardware processor; and
a wireless communication interface configured to establish communication between the first and second windshield washer kiosks;
wherein the first hardware processor is configured to:
receive a payment authorization; and
transmit session data to the second windshield washer kiosk; and
wherein the second hardware processor is configured to:
receive the session data; and
enable operation of a washer wand associated with the second windshield washer kiosk based on the received session data.

13. The system of claim 12, wherein the first and second kiosks are configured to synchronize remaining session time and/or fluid usage data.

14. The system of any of claims 12 or 13, wherein the first and second kiosks are positioned on opposite sides of a vehicle service area.

15. The system of any of claims 12 to 14, wherein at least one of the first or second windshield washer kiosks further comprises:
a plurality of fluid reservoirs, each configured to store a different cleaning fluid, and
a selection circuit operatively coupled to the respective hardware processor, wherein the hardware processor of the at least one of the first or second windshield washer kiosks is configured to selectively control which of the plurality of fluid reservoirs supplies cleaning fluid to the washer wand.
